# EUROPÄISCHE PATENTSCHRIFT

(11) **EP 3 233 216 B1**
(45) Veröffentlichungstag und Bekanntmachung des Hinweises auf die Patenterteilung: **05.02.2020**
(21) Anmeldenummer: 15813444.5
(22) Anmeldetag: 18.12.2015
(51) Int. Cl.: A62C 35/68, A62C 37/44, F16K 37/00

(54) **FEUERLÖSCHANLAGE MIT EINER ALARMVENTILSTATION, INSBESONDERE SPRINKLER- ODER SPRÜHWASSERLÖSCHANLAGE**
FIRE EXTINGUISHING SYSTEM COMPRISING AN ALARM VALVE STATION, IN PARTICULAR A SPRINKLER OR SPRAY WATER EXTINGUISHING SYSTEM
INSTALLATION D'EXTINCTION D'INCENDIE AVEC UNE STATION DE VANNE D'ALARME, NOTAMMENT D'UNE INSTALLATION D'EXTINCTION D'INCENDIE À GICLEURS D'INCENDIE OU À EAU PULVÉRISÉE

(30) Priorität: 19.12.2014 DE 102014226639
(43) Veröffentlichungstag der Anmeldung: 25.10.2017
(73) Patentinhaber: Minimax GmbH & Co. KG, 23840 Bad Oldesloe (DE)
(72) Erfinder: POHL, Matthias, 23847 Stubben (DE); STACHOWITZ, Frank, 23909 Ratzeburg (DE); KEMPF, Peter, 23843 Bad Oldesloe (DE); KUNERT, Georg, 23966 Wismar (DE)
(74) Vertreter: Eisenführ Speiser
(86) Internationale Anmeldenummer: PCT/EP2015/080592
(87) Internationale Veröffentlichungsnummer: WO 2016/097341

(56) Entgegenhaltungen:
- DE-A1- 19 904 477
- DE-A1-102007 049 588
- JP-B2- 3 292 567
- JP-B2- 3 685 883
- US-A1- 2014 014 187

## Beschreibung

Die Erfindung betrifft eine Feuerlöschanlage mit einer Alarmventilstation, insbesondere Sprinkler- oder Sprühwasserlöschanlage, mit einem Feuerlöschanlagenventil, mit einem Gehäuse, welches eine Fluideintrittskammer, eine Fluidaustrittskammer und einen zwischen einem Sperrzustand und einem Freigabezustand hin- und her bewegbaren Schließkörper aufweist, wobei die Fluideintrittskammer und die Fluidaustrittskammer im Sperrzustand voneinander getrennt sind und im Freigabezustand fluidleitend miteinander kommunizieren. Die Erfindung betrifft ferner eine solche Feuerlöschanlage mit einer Alarmventilstation, an die eine oder mehrere Fluidleitungen angeschlossen sind.

Unter Feuerlöschanlagenventilen wird im Sinne der vorliegenden Erfindung die Gattung sowohl passiver als auch aktiver Alarmventile verstanden, die für den Einsatz in Alarmventilstationen von Feuerlöschanlagen, speziell Feuerlöschanlagen mit wasserbasierenden Löschmitteln (bspw. Wasser, Wasser mit Zusätzen, Wassernebel im Nieder- und Hochdruckbereich) konzipiert sind. Prominenteste Vertreter dieser Ventiltypen bei Feuerlöschanlagen mit wasserbasierenden Löschmitteln sind Nass- und Trockenalarmventile, sowie Sprühwasserventile. Im Bereich der Feuerlöschanlagen mit gasförmigen Löschmitteln ist der Begriff Alarmventile unüblich, hier wird üblicherweise von Bereichsventilen oder Löschmittelsteuerventilen gesprochen. Der in diesem Schutzrecht verwendete Begriff "Alarmventil" beinhaltet auch diese Ventiltypen.

Erfindungsgemäß wird unter einer Alarmventilstation das Feuerlöschanlagenventil und seine unmittelbare funktionale Umgebung verstanden. Dazu gehören neben dem Feuerlöschanlagenventil selbst alle Elemente, insbesondere Zubehörteile, Absperrorgane, Armaturen und Leitungen, die nicht der Löschmittelzuleitung und Löschmittelableitung zuzuordnen sind, sondern zu Mess-, Alarm-, Steuer-, Überwachungszwecken an das Feuerlöschanlagenventil angebaut bzw. in dessen Nahbereich angeordnet sind.

Man versteht unter passiven Alarmventilen, dass diese bei Überschreiten vorgegebener Druckdifferenzen zwischen Eintritts- und Austrittsseite selbsttätig öffnen, wobei in der Regel von den Ventilen selbst ein Alarm ausgelöst wird in Reaktion auf das Erfassen dieses Öffnungszustandes, beispielsweise mittelbar mittels eines in einem externen Alarmkanal angeordneten Druckschalters, über den dann ein Alarmmittel wie etwa eine elektrisch betriebene Alarmhupe gesteuert wird, und/oder unmittelbar durch Steuerung des Löschmittelflusses zu einem fluidtechnisch mit dem Alarmventil verbundenen hydraulisch betriebenen Alarmmittel, wie etwa einer wassergetriebenen Alarmglocke. Teilweise werden auch anstelle von oder zusätzlich zu hydraulisch betriebenen Alarmglocken optische Anzeigen im Bereich der Alarmventile angeordnet, um bei einer Vielzahl parallel angeordneter Alarmventile besser unterscheiden zu können, welches der Alarmventile geöffnet wurde.

Unter aktiven Alarmventilen wird verstanden, dass die Ventile nach einem Eingang eines Feuersignals von externen Branderkennungsmitteln, oder als Funktion von externen Steuereingriffen, aktiv durch Öffnen des Ventils den Fluidstrom freigeben und ein Alarm ausgelöst wird wie bei den passiven Alarmventilen. Den vorgenannten Ventiltypen ist gemein, dass sie oft über lange Zeiträume in Feuerlöschanlagen installiert sind, ohne zum Einsatz kommen zu müssen, und es darauf ankommt, dass die Ventile im Ernstfall zuverlässig funktionieren. Somit ist eine regelmäßige Überprüfung der Funktionsfähigkeit der Ventile unerlässlich.

Die Inspektion bekannter Feuerlöschanlagen erfolgt in regelmäßigen Abständen, beispielsweise wöchentlich, meist durch Personal des Feuerlöschanlagenbetreibers. Die Inspektion einer Feuerlöschanlage umfasst insbesondere die Überprüfung der Alarmfunktion sowie ggf. das Ablesen der Signale von Sensoren (z.B. Drücke, Füllstände, Temperaturen) und/oder die Prüfung, ob die Aktoren der Feuerlöschanlage wie gewünscht betätigt werden. Bei den Sensoren kann es sich um mechanische Sensoren handeln wie Manometer, aber auch um Sensoren, die das physikalische Signal in ein elektrisches/elektronisches Signal umsetzen.

Zur Überprüfung der Alarmfunktion einer Feuerlöschanlage war es bisher notwendig, dass ein Ventil, beispielsweise ein Kugelhahn, manuell geöffnet wird, um eine Flutung einer oder mehrerer Leitungen auszulösen. Auf diese Weise wird das Auslösen eines Löschvorgangs simuliert, sodass eine Überprüfung der Alarmfunktion erfolgen kann. Beim Auslösen eines Löschvorgangs wird üblicherweise ein Alarmsignal an eine Brandmelder- und/oder Löschsteuerzentrale gesendet, sodass beim Eingang eines Alarmsignals bei der Brandmelder- und/oder Löschsteuerzentrale davon ausgegangen werden kann, dass die Alarmfunktion der Feuerlöschanlage ordnungsgemäß arbeitet. Anschließend wird das Ventil wieder geschlossen, die Brandmelder- und/oder Löschsteuerzentrale zurückgesetzt und die Feuerlöschanlage somit wieder ein einen betriebsbereiten Zustand versetzt. Zur Überprüfung der Alarmfunktion einer Feuerlöschanlage ist folglich ein hoher zeitlicher und personeller Aufwand notwendig.

Zum Ablesen der Anzeigewerte der Sensoren und/oder Prüfung, ob Aktoren einer Feuerlöschanlage wie gewünscht betätigt werden wird üblicherweise die Brandmelder- und/oder Löschsteuerzentrale ausgelesen bzw. über diese Zentrale Steuersignale an die Aktoren gesendet, welche signalleitend mit den entsprechenden Sensoren und/oder Aktoren verbunden ist. Die Brandmelder- und/oder Löschsteuerzentrale befindet sich jedoch regelmäßig, insbesondere bei komplexen Feuerlöschanlagen, in einem separaten Raum. Das Wartungspersonal, beispielsweise der Sprinklerwart, Monteur oder Service-Mitarbeiter, kann somit die Überprüfung der Sensoren und/oder die Auslösung des Steuersignals an die Aktoren nicht direkt an dem Alarmventil einer Feuerlöschanlage durchführen. Dies erhöht den Inspektionsaufwand insbesondere bei Großanlagen erheblich.

Gleiches gilt auch für die Arbeiten, die während der Wartung anfallen, die beispielsweise jährlich durch den Hersteller der Feuerlöschanlage erforderlich werden. Im Folgenden werden die Inspektions- und Wartungstätigkeiten unter dem Begriff Wartung zusammengefasst.

Eine gattungsgemäße Feuerlöschanlage ist in DE 199 04 477 A1 offenbart.

Der Erfindung lag folglich die Aufgabe zugrunde, eine Feuerlöschanlage mit einer Alarmventilstation bereitzustellen, welche die im Stand der Technik bekannten Nachteile zumindest teilweise überwindet. Insbesondere lag der Erfindung die Aufgabe zugrunde, eine Alarmventilstation bereitzustellen, die eine erhöhte Benutzerfreundlichkeit bietet.

Die Erfindung löst die ihr zugrunde liegende Aufgabe gemäß Anspruch 1 indem die Auswerteinheit signalleitend mit einem oder mehreren Aktoren verbunden ist, und dazu eingerichtet ist, den oder die Aktoren mittels der Steuerbefehle zu steuern. Gemäß dieser Ausgestaltung weist die Alarmventilstation vorzugsweise einen oder mehrere Sensoren auf, und die Auswerteinheit ist dazu eingerichtet, vorzugsweise autonom, in Abhängigkeit der ihr vorliegenden Sensordaten den oder die Aktoren zu steuern.

Weiter vorzugsweise ist die Auswerteinheit in der Ausführungsform, in welcher sie eine Datenschnittstelle aufweist, zum Empfang von Steuerbefehlen mittels der Datenschnittstelle eingerichtet und dazu eingerichtet ist, den oder die Aktoren mittels der empfangenen, und vorzugsweise weiterverarbeiteten, Steuerbefehle zu steuern. Sofern im Sinne der Erfindung von Steuerbefehlen gesprochen wird, so werden hierunter sowohl Signale verstanden, die die Auswerteinheit ohne Weiterverarbeitung an die Aktoren zu deren Steuerung weitergibt, als auch Signale, die die Auswerteinheit verarbeitet, bevor sie mittels der zu Steuerbefehlen verarbeiteten Signale die Aktoren ansteuert.

Der Aktor kann hierbei ein prinzipiell bekannter elektrischer beziehungsweise elektromagnetischer, hydraulischer oder pneumatischer Steuerantrieb sein, jeweils mit entsprechender Ansteuerung.

Der Schließkörper weist gemäß der Erfindung einen Aktor als Steuerantrieb auf, wobei die elektronische Auswerteinheit dazu eingerichtet ist, den Schließkörper mittels des Steuerantriebs wahlweise in die Freigabe- oder in die Sperrstellung zu bringen, und/oder einen Aktor als Vorsteuerantrieb, wobei die elektronische Auswerteinheit dazu eingerichtet ist, den Schließkörper mittels des Vorsteuerantriebs entweder zu verriegeln oder zu entriegeln. In dem verriegelten Zustand bleibt der Schließkörper trotz eines etwaig herrschenden Fluidüberdrucks in der Fluideintrittskammer in der Sperrstellung. In dem entriegelten Zustand bringt der Fluiddruck in der Fluideintrittskammer den Schließkörper in die Freigabestellung. Im Unterschied zu den weiter oben beschriebenen aktiven Feuerlöschanlagenventilen, welche die Bewegung des Schließkörpers in beiden Richtungen, also in die Freigabestellung und von dort auch in die Sperrstellung steuern, bilden Ventile mit Vorsteuerantrieb eine Mischform zwischen passiven und aktiven Ventilen. Sie können die Freigabe mittels Verriegelung unterbinden, aber nicht aktiv nach erfolgter Freigabe die Verriegelung wieder herstellen. Sie sind auch unter dem Begriff der vorgesteuerten Alarmventile bekannt.

Gemäß der Erfindung weist die Alarmventilstation alternativ oder zusätzlich einen Alarmkanal und ein Prüfventil zum Fluten des Alarmkanals auf, wobei das Prüfventil einen Aktor als Steuerantrieb aufweist, und die elektronische Auswerteinheit dazu eingerichtet ist, das Prüfventil mittels des Steuerantriebs wahlweise in die Freigabe- oder in die Sperrstellung zu bringen. In dieser Ausführungsform ist eine dedizierte Ventilanordnung vorgesehen, die sogenannte Prüfventilanordnung, die alternativ oder zusätzlich zu dem zwischen der Fluideintrittskammer und der Fluidaustrittskammer angeordneten Schließkörper des Feuerlöschanlagenventils in dem Alarmkanal sitzt. Diese Prüfventilanordnung ist dazu eingerichtet, eine Flutung des Alarmkanals herbeizuführen, ohne dass hierbei der (Haupt-) Schließkörper betätigt werden muss (je nach Ausführung des Feuerlöschanlagenventils entweder passiv oder mittels Steuerantrieb). Vorzugsweise ist der Steuerantrieb dieser Prüfventilanordnung ebenfalls fernsteuerbar, und zwar mittels der Auswerteinheit autonom und/oder mittels der Datenschnittstelle.

Beim fernsteuerbaren Öffnen des Schließkörpers des Feuerlöschanlagenventils bzw. der Prüfventilanordnung wird ein durch den Fluss von Löschfluid verursachter Druckanstieg sensiert, beispielsweise von einem oder mehreren in dem Alarmkanal angeordneten Drucksensoren, und kann mittels der Auswerteinheit weiterverarbeitet werden. Dadurch, dass diese Möglichkeit der Fernsteuerung eröffnet wird, sinkt der für die Prüfung der Betriebsbereitschaft der Feuerlöschanlage notwendige zeitliche und personelle Aufwand somit erheblich.

Der Alarmkanal ist vorzugsweise als intern in dem Feuerlöschanlagenventil geführter Kanal und/oder als externe Leitung an der Ventilstation ausgeführt.

Aufgrund der Auswerteinheit, welche signalleitend mit dem Steuerantrieb verbunden ist, ist eine manuelle Betätigung des jeweiligen Aktors, insbesondere Steuerantriebs, oder Vorsteuerantriebs des Schließkörpers des Prüfventils oder des Feuerlöschanlagenventils nicht mehr zwingend notwendig, um die Alarmfunktion der Alarmventilstation zu überprüfen. Bei der erfindungsgemäßen Alarmventilstation wird über die Datenschnittstelle und die Auswerteinheit die Wahlmöglichkeit zwischen einer zentralen Steuerung über eine brandmeldezentrale oder Fernleitwarte, und/oder einer dezentralen Fernsteuerung durch einen Bediener im Feld geschaffen.

Erfindungsgemäß weist die Alarmventilstation einen oder mehrere Sensoren auf, wobei die elektronische Auswerteinheit signalleitend mit dem bzw. den Sensoren zum Empfang von Daten verbunden ist, zur Datenverarbeitung in zumindest eines von: Zustandsinformationen, oder Handlungsanweisungen eingerichtet ist, und zur Übermittlung der Zustandsinformationen an eine Anzeigeeinheit eingerichtet ist. Unter Zustandsinformation werden erfindungsgemäß insbesondere der Sperr- und Freigabezustand des Schließkörpers bzw. des zusätzlichen Prüfventils, Daten, die von in der oder an der Alarmventilstation angeordneten Sensoren erfasst werden, sowie weiter vorzugsweise der Standort des Ventils, der Ventiltyp sowie Datenverarbeitungsergebnisse verstanden, die die elektronische Auswerteinheit auf Basis der empfangenen Daten ermittelt hat. Unter Handlungsanweisungen werden beispielsweise Textnachrichten verstanden, die den Betrachter zum Auslösen bestimmter Funktionen veranlassen, etwa das An- oder Abschalten bestimmter Armaturen, Das Evakuieren eines Raums, das Durchführen von Funktionstests etc.

Die Erfindung folgt dem Ansatz, mit der Auswerteinheit der Alarmventilstation eine datenverarbeitende Intelligenz zur Verfügung zu stellen, die separat von der Überwachung durch eine Leitstelle, Brandmeldezentrale und dergleichen Zustandsinformationen und/oder Handlungsanweisungen bereitstellt. Dies ermöglicht es dem Bediener, die Alarmventilstation zu warten und zu betreiben, ohne hierbei stets auf Daten der Leitstelle, Brandmeldezentrale etc. zurückgreifen zu müssen.

Die Alarmventilstation weist vorzugsweise eine Anzeigeeinheit auf, die vorzugsweise dazu eingerichtet ist, die Zustandsinformationen und/oder Handlungsanweisungen von der Auswerteinheit zu empfangen und anzuzeigen.

Die Anzeigeeinheit ist vorzugsweise in das Gehäuse des Feuerlöschanlagenventils integriert, oder alternativ extern an dem Gehäuse oder im Nahbereich der Alarmventilstation angeordnet.

In einer bevorzugten Ausführungsform sind die Anzeigeeinheit und die Auswerteinheit in dem Gehäuse des Feuerlöschanlagenventils oder in einem gemeinsamen Gehäuse integriert, welches extern an dem Feuerlöschanlagenventil oder im Nahbereich der Alarmventilstation angeordnet ist.

Die signalleitende Verbindung zwischen der Auswerteinheit und dem oder den Sensoren ist wahlweise kabelgebunden oder kabellos ausgeführt.

In einer bevorzugten Ausführungsform ist die Anzeigeeinheit dazu eingerichtet, Zahlenwerte und/oder Textzeichen wiederzugeben, beispielsweise in Form eines LCD- oder LED-Displays. Alternativ oder zusätzlich kann die Anzeige aber beispielsweise in einer ökonomischen Bauform auch lediglich einzelne LEDs oder andere Leuchtmittel aufweisen, die dazu eingerichtet sind, durch Aufleuchten oder Nichtleuchten digital bestimmte Zustände wiedergeben. Auch über NFC können die Daten auf einem mobilen Gerät im Nahfeldbereich zur Anzeige gebracht werden.

Vorzugsweise ist die Auswerteinheit dazu eingerichtet, Informationen in verschiedenen Sprachen bereitzustellen. Insbesondere ist auf der Auswerteinheit und/oder Anzeigeeinheit eine Software implementiert, welche aktualisierbar ist.

Vorzugsweise ist die Auswerteinheit dazu eingerichtet, die Uhrzeit und/oder die Betriebsstunden, des Feuerlöschanlagenventils sowie ggf. der verschiedenen Komponenten der Alarmventilstation zu protokollieren und bereitzustellen, sowie besonders bevorzugt mittels der Anzeigeeinheit anzuzeigen. Insbesondere ist die Auswerteinheit dazu eingerichtet, der Anzeigeeinheit eine Menüführung zur Darstellung bereitzustellen, welche es dem Bediener erlaubt Zustandsinformationen wie Druck- und/oder Temperaturdaten der Feuerlöschanlage abzurufen.

Insbesondere ist die Auswerteinheit dazu ausgebildet, eine automatische Überprüfung der Alarmfunktion der Feuerlöschanlage durchzuführen. Vorzugsweise ist die Auswerteinheit dazu eingerichtet, ein Prüfventil der Feuerlöschanlage oder das Feuerlöschanlagenventil in regelmäßigen Zeitabständen, beispielsweise wöchentlich, zu öffnen, um eine Flutung einer oder mehrerer Leitungen auszulösen. Weiter vorzugsweise ist die Auswerteinheit dazu eingerichtet, sich bei der Flutung ändernde Betriebszustände zu erfassen, beispielsweise durch einen Druckanstieg an mit dem Alarmkanal fluidtechnisch verbundenen Drucksensor. Die Alarmventilstation ist ferner dazu eingerichtet, nach Flutung der Leitungen ein Alarmsignal an eine Brandmelder- und/oder Löschsteuerzentrale und/oder die Anzeigeeinheit zu senden.

Vorzugsweise ist die Anzeigeeinheit dazu eingerichtet, Informationen über das Ergebnis der Überprüfung der Alarmfunktion der Feuerlöschanlage anzuzeigen. Weiter vorzugsweise ist die Auswerteinheit und/oder Anzeigeeinheit dazu eingerichtet, ein Signal über die erfolgreich abgeschlossene Alarmprobe zur Übermittlung an die Brandmelde- und/oder Löschsteuerzentrale zu erzeugen.

Insbesondere weist die Anzeigeeinheit eine Menüführung auf, welche es dem Bediener erlaubt ein Zeitintervall für die Durchführung der Überprüfung der Alarmfunktion der Feuerlöschanlage und /oder des Servicezeitpunkts festzulegen.

Weiter vorzugsweise ist die Auswerteinheit und/oder Anzeigeeinheit dazu eingerichtet, Daten von dem oder den Sensoren sowie deren zeitlichen Verlauf zu speichern.

Dazu kann ggf. eine Batteriepufferung integriert sein oder ein nichtflüchtiges elektronisches Speicherelement angeordnet sein.

Die erfindungsgemäße Alarmventilstation wird ferner dadurch vorteilhaft weitergebildet, dass die Anzeigeeinheit als portables Kommunikationsgerät, vorzugsweise als Mobilfunkgerät, ausgebildet ist. Portable Kommunikationsgeräte, wie beispielsweise Mobilfunkgeräte, weisen üblicherweise bereits eine geeignete Hard- und Software auf, welche die Implementierung entsprechender Anzeigefunktionen ohne großen Aufwand und ohne hardwareseitige Erweiterung erlauben. Service- und Wartungspersonen führen regelmäßig beispielsweise Mobilfunkgeräte mit, welche nach Installation einer entsprechenden Software-Applikation dazu eingerichtet sind, einem Anwender Anzeigen über bestimmte Betriebszustände zur Verfügung zu stellen. In dieser Ausführungsform ist die Anzeigeeinheit nicht permanent an der Alarmventilstation angeordnet, sondern nur dann temporär, wenn der Bediener an der Alarmventilstation arbeitet.

In einer weiteren bevorzugten Ausführungsform der erfindungsgemäßen Alarmventilstation umfasst die Auswerteinheit und/oder Anzeigeeinheit eine Eingabeeinrichtung zum Eingeben von Steuerbefehlen. Vorzugsweise weist die Eingabeeinrichtung drucksensitive Eingabeelemente auf. Insbesondere sind die drucksensitiven Eingabeelemente als Druckknöpfe, Tasten und/oder als Touchscreen ausgebildet.

Vorzugsweise ist die Anzeigeeinheit in Verbindung mit der Auswerteinheit dazu eingerichtet, den Bediener sequentiell anzuleiten, z.B. bei der Durchführung von Bedienvorgängen. Dazu können in der Auswerteinheit und/oder Anzeigeeinheit Abfolgen von Handlungsanweisungen hinterlegt sein, die vom Bediener auszuführen sind. Alternativ können die Abfolgen außerhalb der Feuerlöschanlagenventilstation hinterlegt sein, vorzugsweise in der Brandmelde- und/oder Löschsteuerzentrale, wobei die auf der Anzeigeeinheit angezeigten Informationen bei Bedarf "von außen" eingespielt werden.

Weiter vorzugsweise ist die Anzeigeeinheit in Verbindung mit der Auswerteinheit dazu eingerichtet, den Bediener situativ anzuleiten, beispielsweise bei der Fehlersuche. Dazu können in der Software der Auswerteinheit und/oder Anzeigeeinheit Algorithmen hinterlegt sein, die dazu führen, dass an der Anzeigeeinheit in Abhängigkeit der Signale der in der oder an der Feuerlöschanlagenventilstation angeordneten Sensoren situative Zustandsinformationen und/oder Handlungsanweisungen angezeigt werden.

In einer besonders bevorzugten Ausführungsform ist an dem Gehäuse des Feuerlöschanlagenventils eine Befestigungseinrichtung zum reversibel lösbaren Befestigen der Anzeigeeinheit angeordnet. Dadurch, dass an dem Gehäuse des Feuerlöschanlagenventils eine Befestigungseinrichtung zum reversibel lösbaren Befestigen der Anzeigeeinheit angeordnet ist, kann die Anzeigeeinheit entweder als stationäres Gerät an der Feuerlöschanlage eingesetzt werden oder als portables Gerät vom Anwender mitgeführt werden. Wird die Anzeigeeinheit als stationäres Gerät eingesetzt, gewährleistet die Befestigungseinrichtung vorzugsweise eine robuste und stoßunempfindliche Ausführung und Halterung der Anzeigeeinheit an dem Gehäuse des Feuerlöschanlagenventils.

Vorzugsweise umfasst die Befestigungseinrichtung Schraubmittel, Steckmittel und/oder Klemmmittel, zum Anschrauben, Anstecken bzw. Anklemmen der Anzeigeeinheit an das Gehäuse des Feuerlöschanlagenventils. Insbesondere weist die Befestigungseinrichtung ein Scharnier auf, welches dazu eingerichtet ist, den Anstellwinkel bzw. die Neigung der befestigten Anzeigeeinheit zu verändern.

In einer bevorzugten Ausführungsform ist die Datenschnittstelle zum unidirektionalen oder bidirektionalen Datenaustausch mit einer fern beabstandeten Datenverarbeitungseinheit eingerichtet ist, die beispielsweise einer Leitstelle und/oder Brandmeldezentrale und/oder Löschsteuerzentrale zugeordnet ist. Hiermit kann die Datenverarbeitungseinheit beispielsweise die an der Datenschnittstelle bereitgestellten Zustandsinformationen auslesen. Die Datenschnittstelle ist vorzugsweise kabelgebunden oder kabellos, vorzugsweise als LAN, WLAN, oder TCP/IP Verbindung ausgebildet.

Vorzugsweise sind die Anzeigeeinheit und die Auswerteinheit mittels der Datenschnittstelle signalleitend verbunden.

Alternativ sind die Anzeigeeinheit und die Auswerteinheit mittels einer zweiten, dedizierten Datenschnittstelle signalleitend verbunden sind, welche ausgebildet ist als: USB-Schnittstelle, PCI-Schnittstelle, PCI-Express-Schnittstelle, Thunderbolt-Schnittstelle, WPAN-Schnittstelle, insbesondere VFIR-IrDA, IFIR-IrDA, Bluetooth, oder NFC.

Besonders bevorzugt sind die Anzeigeeinheit und die Auswerteinheit dazu eingerichtet, sich gegenseitig mittels der dedizierten Schnittstelle zu identifizieren und vorzugsweise selbsttätig die signalleitende Verbindung aufzubauen.

Vorzugsweise ist die Datenschnittstelle zur Betriebsspannungsversorgung für die im Feuerlöschanlagenventil und/oder Prüfventil integrierten Elemente eingerichtet. Der Datenaustausch kann kabelgebunden oder kabellos erfolgen. Mittels der Datenschnittstelle können die erfassten Druckdaten des Drucksensors und/oder Druckdaten aus einem Datenspeicher und/oder Druckdaten von extern angeordneten, mit der Datenschnittstelle kommunizierenden Drucksensoren an eine externe Datenverarbeitungseinheit, beispielsweise an eine Brandmelde- und/oder Löschsteuerzentrale. Hierdurch wird es ermöglicht, mittels signaltechnischer Verarbeitung und Bewertung der dort auflaufenden Druckdaten die Funktionsfähigkeit des Feuerlöschanlagenventils zu überprüfen, ohne eine Begehung vor Ort vornehmen zu müssen. Lediglich wenn durch bestimmte Druckdatenverläufe, beispielsweise plötzliche Druckabfälle, ein Indiz dafür vorliegt, dass die Funktion des Feuerlöschanlagenventils bzw. der Alarmventilstation eingeschränkt ist, kann situativ eine Begehung vorgenommen werden. Die Übertragung der Druckdaten mittels der Datenschnittstelle ermöglicht ferner eine mittels der Datenverarbeitungseinheit getriggerte Ansteuerung von zusätzlichen, externen Anzeigemitteln, vorzugsweise akustischen und/oder optischen Alarmmitteln und/oder weiteren (alphanumerischen) Displays.

Vorzugsweise ist die Datenverarbeitungseinheit dazu eingerichtet, die von der Datenschnittstelle ausgelesene Information zu analysieren, und in Abhängigkeit von dieser Analyse eines, mehrere oder sämtliche der folgenden Ereignisse auszulösen:
- Ausgeben einer Nachricht darüber, ob das Feuerlöschventil ordnungsgemäß arbeitet,
- Ausgeben einer Nachricht darüber, ob in der Fluidleitung ein ausreichend hoher Fluiddruck herrscht, und/oder
- Ausgeben einer Nachricht darüber, dass das Feuerlöschventil geöffnet worden ist.

Anstelle von oder zusätzlich zu Drucksensoren sind an der Alarmventilstation bzw. an oder in dem Feuerlöschanlagenventil weitere Sensortypen angeordnet, deren Daten mittels der Auswerteinheit über die Datenschnittstelle kommuniziert werden und/oder über die Auswerteinheit ausgewertet und/oder die Datenverarbeitungseinheit verarbeitet werden. Dazu gehören vorzugsweise Sensoren zur Feststellung von Temperaturen, Schaltstellungen von Stellgliedern (Aktoren) und Füllstände. Die nachfolgenden Ausführungen für Drucksensoren gelten entsprechend auch für die weiteren Sensortypen.

Unter einer Nachricht wird diesbezüglich gemäß der folgenden, nicht abschließenden Aufzählung ein optisches und/oder akustisches Signal, vorzugsweise mit einer vordefinierten Signalfolge, verstanden, sowie weiter vorzugsweise zur Fernübertragung eine SMS, Telefon- oder VOIP- Sprachnachricht, Fax-Nachricht, E-Mail, IRC-Nachricht, Nachricht in Form einer elektronischen Push- und Pull-Benachrichtigung, Internetprotokoll-basierte Nachricht, Ethernetprotokoll-basierte Nachricht, und dergleichen. Der Inhalt dieser Nachrichten ist vorzugsweise in Nachrichtendateien gespeichert.

In einer weiteren Ausgestaltung der Erfindung, werden die oben genannten Nachrichten oder Nachrichtendateien und/oder Zustandsinformationen vom Feuerlöschanlagenventil bzw. der Alarmventilstation selbst versendet. Zustandsinformationen sind vorzugsweise Informationen/Signale über die Änderung des Sperr- oder Freigabezustandes des Schließkörpers des Feuerlöschanlagenventils, Druckwerte oder Meldungen über Druckgrenzwertüber- oder Unterschreitung. Hierzu weist der Datenspeicher vorgegebene Nachrichtendateien und/oder mindestens einen vordefinierten Druckgrenzwert auf. In Abhängigkeit von den erfassten Druckwerten des Drucksensors und dem Vergleich mit dem mindestens einen vordefinierten Druckgrenzwert, vorzugsweise durch die elektronische Auswerteinheit, wird bei Überschreiten oder Unterschreiten des mindestens einen vordefinierten Grenzwertes von der elektronischen Auswerteinheit eine mit diesem mindestens einen vordefinierten Grenzwerte assoziierte Nachrichtendatei versendet, vorzugsweise über die Datenschnittstelle. Mit Hilfe eines Konfigurationsmittels wird über die Datenschnittstelle oder eine dedizierte Konfigurationsschnittstelle ein Auslesen des Datenspeichers und/oder ein Update einer eingebetteten Software der elektronischen Auswerteinheit und/oder Anzeigeeinheit und/oder Ändern oder Eingeben des mindestens einen Druckgrenzwertes und/oder einer oder mehrerer Nachrichtendateien realisiert. eine solche Konfigurationsschnittstelle weist vorzugsweise das Feuerlöschanlagenventil oder dessen Gehäuse oder die Auswerteinheit oder die Anzeigeeinheit auf. In einer besonders bevorzugten Ausführung ist diese Konfigurationsschnittstelle im Gehäusedeckel des Feuerlöschanlagenventils integriert.

Als Konfigurationsmittel kommt vorzugsweise ein mit der Datenschnittstelle oder Konfigurationsschnittstelle signalleitend verbundener stationärer oder tragbarer Computer, Handheld, Smartphone oder dergleichen in Betracht. Das Konfigurationsmittel wird vorzugsweise aus der nicht abschließenden Liste der folgenden Geräte ausgewählt, Notebook, Tablet, Smartphone, Programmiergerät, Servicegerät.

Das Auslesen des Datenspeichers und/oder ein Update einer eingebetteten Software der elektronischen Auswerteinheit und/oder Ändern oder Eingeben des mindestens einen Druckgrenzwertes und/oder einer oder mehrerer Nachrichtendateien erfolgt in einer alternativen Ausführung über die Datenschnittstelle, vorzugsweise mit Hilfe der Brandmelder- und/oder Löschsteuerzentrale.

Die Erfindung wird ferner dadurch vorteilhaft weitergebildet, dass die Datenschnittstelle und die Datenverarbeitungseinheit zum bidirektionalen kabellosen Datenaustausch miteinander eingerichtet sind. Der bidirektionale kabellose Datenaustausch erfolgt vorzugsweise über das Internet.

In einer weiteren bevorzugten Ausführungsform der erfindungsgemäßen Alarmventilstation sind an der einen oder den mehreren Fluidleitungen und/oder in einem Alarmkanal ein oder mehrere weitere Ventile angeordnet, welche mittels der Anzeigeeinheit steuerbar, insbesondere fernsteuerbar, sind.

Die erfindungsgemäße Alarmventilstation wird ferner durch einen oder mehrere elektromagnetische Antriebe, welche mittels der Auswerteinheit steuerbar, insbesondere fernsteuerbar, sind, weitergebildet.

In einer bevorzugten Ausführung ist ein Drucksensor mit dem Alarmkanal fluidleitend verbunden. Der Alarmkanal ist vorzugsweise fluidleitend mit der Fluideintrittskammer und/oder einer Löschfluidversorgung verbunden, sobald sich der Schließkörper in Freigabestellung befindet. Der Alarmkanal ist in einer solchen Ausführungsform, in der das Feuerlöschanlagenventil ein Prüfventil aufweist, vorzugsweise fluidleitend mit der Fluideintrittskammer und/oder einer Löschfluidversorgung verbunden, sobald das Prüfventil geöffnet wird. In geschlossener Stellung des im Alarmkanal vorgesehenen Prüfventils ist der Bereich stromabwärts, also in Fließrichtung hinter dem Prüfventil drucklos und wenigstens überwiegend, vorzugsweise vollständig löschfluidfrei. In geöffneter Stellung des Prüfventils baut sich im Alarmkanal und den daran angeschlossenen Bauteilen wie dem Drucksensor vorzugsweise der gleiche Druck auf wie in der Fluideintrittskammer des Feuerlöschanlagenventils, was als Alarm gewertet und angezeigt wird.

In einer weiteren bevorzugten Ausführung ist am Feuerlöschanlagenventil, vorzugsweise Naßalarmventil, ein vorzugsweise elektromagnetisch betätigtes Ventil, vorzugsweise Prüfventil fluidleitend mit der Fluidaustrittskammer des Feuerlöschanlagenventils einerseits, und mit der Umgebung andererseits verbunden. In geschlossener Stellung des Prüfventils ist der Schließkörper des Feuerlöschanlagenventils geschlossen und es fließt kein Löschfluid. In geöffneter Stellung des Prüfventils fließt Löschfluid aus der Fluidaustrittskammer in die Umgebung. Bei entsprechender Dimensionierung des Magnetventils fließt ein so großer Volumenstrom in die Umgebung, dass der Schließkörper des Feuerlöschanlagenventils geöffnet wird. Vorzugsweise weist das Feuerlöschanlagenventil einen fluidleitend mit dem Schließkörper verbundenen Alarmkanal auf, in dem wenigstens ein Drucksensor angeordnet ist. Dieser Drucksensor erfasst sodann den sich bei geöffnetem Prüfventil aufbauenden Druck im Alarmkanal, der vorzugsweise von der Anzeigeeinheit als Alarm angezeigt wird.

In einer weiteren bevorzugten Ausführung ist am Feuerlöschanlagenventil ein, vorzugsweise elektromagnetisch betätigter, Kolben angeordnet, der den Schließkörper des Feuerlöschanlagenventils in der Sperrstellung hält. Bei unbetätigtem Antrieb befindet sich der Kolben in einer Ruheposition, die das Öffnen des Schließkörpers mechanisch blockiert. Bei Betätigung des elektromagnetischen Antriebs wird der Kolben aus seiner Ruheposition bewegt und gibt dabei den Bewegungsweg des Schließkörpers frei. Die Betätigung des Antriebes erlaubt ein direktes ferngesteuertes Öffnen von Feuerlöschanlagenventilen, vorzugsweise Sprühwasserventilen.

Die erfindungsgemäße Alarmventilstation wird ferner durch einen oder durch mehrere optische und/oder akustische Alarmmittel weitergebildet, welche mittels der Auswerteinheit steuerbar, insbesondere fernsteuerbar, sind. Vorzugsweise sind die optischen und/oder akustischen Alarmmittel in die Anzeigeeinheit integriert oder als separate Bauteile im Nahbereich der Alarmventilstation angeordnet. Vorzugsweise ist ein oder sind mehrere optische Alarmmittel als Blitzleuchte ausgebildet. Weiter vorzugsweise ist ein oder sind mehrere akustische Alarmmittel als Hupe an der Alarmventilstation ausgebildet. Unter dem Nahbereich wird in Zusammenhang mit der Erfindung der Bereich von 5m oder weniger, vorzugsweise 3m oder weniger, weiter vorzugsweise 2m und weniger, insbesondere 1m und weniger, um das Feuerlöschanlagenventil herum verstanden.

Vorzugsweise umfasst die Feuerlöschanlage mehrere Leuchtmittel, insbesondere LED-Einheiten, unterschiedlicher Farbe. Mittels Leuchtmitteln in unterschiedlichen Farben lässt sich ein gestuftes Anzeigenkonzept realisieren. Beispielsweise signalisiert das Aufleuchten eines roten Leuchtmittels, dass ein Feuer detektiert wurde, das Aufleuchten eines gelben Leuchtmittels, dass eine Störung vorliegt und das Aufleuchten eines grünen Leuchtmittels, dass weder ein Feuer detektiert wurde noch eine Störung der Feuerlöschanlage vorliegt.

In einer weiteren bevorzugten Ausführungsform der erfindungsgemäßen Feuerlöschanlage ist mindestens ein Drucksensor in das Gehäuse integriert. Unter integriert wird im Sinne der Erfindung verstanden, dass der Drucksensor derart in dem Gehäuse des Ventils verbaut, mit anderen Worten montiert oder eingehaust, ist, dass keine Flansche, Rohrverbindungen und dergleichen als zusätzliche fluidführende Armaturen außen am Ventil oder gar separat zu dem Ventil vorgesehen werden müssen, um die erwähnte Druckmessung durchführen zu können. Durch Integration der Funktion des Drucksensors in das Ventilgehäuse wird die Anzahl der zu verbauenden Teile in der Feuerlöschanlage deutlich reduziert. Die Konfektionierung des Feuerlöschanlagenventils wird zudem vorzugweise bereits in der Herstellung, also vor dem Verbringen an den Einsatzort und dem eigentlichen Montieren vervollständigt, sodass auch der zeitliche Aufwand bereits bei der Inbetriebnahme der Feuerlöschanlage minimiert werden kann.

Weiter vorzugsweise erlaubt die Verwendung des erfindungsgemäßen Alarmventils in einer der beschriebenen Ausführungsformen, auf elektrische Verbindungsleitungen zu verzichten: a) zwischen nahe dem Alarmventil angeordneten elektrisch betriebenen Alarmmitteln oder Anzeigen und einer entfernt angeordneten Brandmelder- und/oder Löschsteuerzentrale, und b) zwischen nahe dem Alarmventil angeordneten Drucksensoren und einer entfernt angeordneten Brandmelder- und/oder Löschsteuerzentrale.

Der Drucksensor ist vorzugsweise dazu eingerichtet, den in der Fluideintrittskammer herrschenden Druck zu erfassen. Es wird in einer Ausführungsform ein Drucksensor in Form eines Druckschalters bevorzugt, der gewissermaßen digital das Erreichen bzw. Über-/Unterschreiten eines Grenzwertes registriert. Mit der Auswahl eines Druckschalters oder einer definierten Einstellung des Druckschalters ist ein Druckgrenzwert vorgegeben. Der Druckschalter liefert als Druckdaten die Information, ob der Schaltdruck anliegt oder nicht (1/0). Besonders bevorzugt wird ein Druckmessaufnehmer, der den tatsächlich anliegenden Druck erfassen und mittels entsprechender Wandelmittel als diskreten Signalwert ausgeben kann. In bevorzugten Ausführungsformen kann der Drucksensor in allgemein bekannter Weise hierzu benötigte Wandler, Verstärker, Microcontroller und dergleichen aufweisen.

Weiter vorzugsweise ist der Drucksensor dazu eingerichtet, den in der Fluidaustrittskammer und/oder in der Fluideintrittskammer herrschenden Druck zu erfassen. Falls der Druck sowohl in der Fluideintrittskammer als auch in der Fluidaustrittskammer erfasst werden soll, wird bevorzugt, einen ersten Drucksensor und einen zweiten Drucksensor vorzusehen, welche beide in das Gehäuse integriert sind, und von denen jeweils ein Drucksensor in der Fluideintritts oder -Austrittskammer wirkend angeordnet wird.

In einer besonders bevorzugten Ausführungsform ist der Drucksensor dazu eingerichtet, den in einem Alarmkanal herrschenden Druck zu erfassen.

Die Anordnung des Drucksensors beziehungsweise eines Messkopfes des Drucksensors kann hierbei wahlweise unmittelbar in der Fluideintrittskammer, der Fluideintrittskammer, oder in einem in das Ventil integrierten Alarmkanal erfolgen. Der Alarmkanal ist vorzugsweise in der Sperrstellung des Schließkörpers fluiddicht von den Fluidkammern des Ventils getrennt. Es herrscht vorzugsweise Umgebungsdruck im Alarmkanal. Erst bei Bewegen des Schließkörpers von der Sperrstellung in die Freigabestellung kommuniziert der Alarmkanal mit den angrenzenden, nun ebenfalls verbundenen Fluidkammern.

In einer weiteren bevorzugten Ausführungsform ist der Drucksensor mit der Anzeigeeinheit und/oder Auswerteinheit zum Ausgeben der erfassten Druckdaten und/oder zum Ausgeben in Abhängigkeit von den erfassten Druckdaten ermittelter Informationen verbunden. Die Verwendung des erfindungsgemäßen Alarmventils in dieser Ausführungsform erlaubt es dem Anwender, nahe dem Alarmventil Anzeigen über bestimmte Betriebszustände zur Verfügung zu stellen, die über die reine Druckangabe hinaus gehen, z.B. Empfehlungen/Anweisungen als Klartext.

In einer bevorzugten Ausführungsform ist der Drucksensor, welcher vorzugsweise als Druckschalter ausgebildet ist, als separates Bauteil außerhalb des Alarmventils, vorzugsweise innerhalb eines Alarmkanals und/oder an einer mit dem Alarmkanal fluidtechnisch verbundenen Leitung ausgebildet. Insbesondere ist eine weitere Anzeigeeinheit an dem Drucksensor befestigt oder in diesen integriert. In einer besonders bevorzugten Ausführungsform ist die weitere Anzeigeeinheit mittels einer Befestigungseinrichtung reversibel lösbar an dem Drucksensor befestigt.

In einer weiteren bevorzugten Ausführungsform ist der Drucksensor mit einem Datenspeicher zum Hinterlegen der erfassten Druckdaten verbunden. Hierdurch wird es ermöglicht, nicht bloß den jeweils momentanen Druckwert zu erfassen, sondern eine Historie des Druckwertverlaufs zu erfassen und zur nachträglichen Auswertung bereitzustellen.

In einer weiteren bevorzugten Ausführungsform sind der Drucksensor und/oder der Datenspeicher und/oder ein oder mehrere externe Drucksensoren mit der Datenschnittstelle zum Auslesen und Fernübertragen der erfassten Druckdaten verbunden. Die Datenschnittstelle umfasst vorzugsweise einen oder mehrere Anschlüsse zur Datenkommunikation.

Die elektronische Auswerteinheit ist vorzugsweise zum Empfang von Daten und/oder zur Übermittlung von Zustandsinformationen des Ventils mit einem, mehreren oder sämtlichen nachfolgenden Elementen verbunden: Dem mindestens einen Drucksensor, der Datenschnittstelle, dem Datenspeicher, einem oder mehreren externen Drucksensoren. Ein Empfang von Daten kommt insbesondere in Betracht von Sensoren, vorzugsweise vom Drucksensor und/oder dem Datenspeicher und/oder der Datenschnittstelle. Ein Übermitteln von Daten wird insbesondere vorgenommen in Richtung der Anzeigeeinheit und/oder der Datenschnittstelle. Unter Zustandsinformation werden insbesondere auch die vom Drucksensor und/oder dem Datenspeicher empfangenen Druckdaten sowie gegebenenfalls Datenverarbeitungsergebnisse, die die elektronische Auswerteinheit auf Basis der empfangenen Daten vorgenommen hat. Zur Vernetzung des Ventils mittels der Datenschnittstelle allgemein und zur Standortübermittlung insbesondere wird vorzugsweise ein sogenanntes Adressierungsmodul in der elektronischen Auswerteinheit vorgesehen. Wenn die Datenschnittstelle beispielsweise als Ringbus ausgebildet ist, kann die Auswerteinheit mittels des Adressierungsmoduls zusätzlich zu bzw. gemeinsam mit den Informationen bezüglich der Druckdaten weitere Informationen wie den Standort ausgeben.

Das Adressierungsmodul, vorzugsweise steckbar und/oder austauschbar ausgeführt, ist über eine Signalleitung mit einem Ringbusteilnehmermodul einer zentralen Steuereinheit, beispielsweise einer Brandmelder- und/oder Löschsteuerzentrale verbunden. Damit ist das Adressierungsmodul ein adressierbarer Teilnehmer auf der Signalleitung, die vorzugsweise als Ringbusleitung ausgebildet ist. Vorzugsweise ist die Adresse des Adressierungsmoduls einstellbar. Das Adressierungsmodul sendet Daten über den Ringbus. In einer bevorzugten Ausführung werden die erfassten Druckwerte oder erfasste Änderungen des Drucks, oder das Auftreten einer Druckänderung oder Störungen mit Hilfe eines Datenübertragungsprotokolls an das Ringbusteilnehmermodul übertragen.

Die Signalleitung ist in einer vorteilhaften Ausführung als geschlossene Ringbusleitung ausgeführt. Diese hat den Vorteil, dass bei Unterbrechung dieser Signalleitung, z.B. bei Drahtbruch, die Energieversorgung und die Kommunikation mit den adressierbaren Teilnehmern von beiden Seiten des ehemaligen Ringes über das Ringbusteilnehmermodul sichergestellt werden. In einer weiteren vorteilhaften Ausführung ist diese Signalleitung als eine Stichleitung für adressierbare Teilnehmer ausgelegt.

Die elektronische Auswerteinheit ist vorzugsweise dazu eingerichtet, von dem Drucksensor und/oder dem Datenspeicher und/oder einem oder mehreren externen Drucksensoren erhaltenen Druckdaten mit vordefinierten Grenzwerten abzugleichen und bei Erreichen bzw. bei Überschreiten oder Unterschreiten dieser Grenzwerte ein repräsentatives Signal als Zustandsdefinition zu übermitteln.

Besonders bevorzugt sind eines, mehrere oder sämtliche der folgenden Elemente in das Gehäuse des Feuerlöschanlagenventils oder der Anzeigeeinheit integriert: die Datenschnittstelle, die Datenspeicher, die elektronische Auswerteinheit.

In einer weiteren bevorzugten Weiterbildung der Erfindung weist das Gehäuse des Feuerlöschanlagenventils einen Gehäusedeckel, vorzugsweise einen Handlochdeckel auf, wobei insbesondere eines, mehrere oder sämtliche der folgenden Elemente in den Gehäusedeckel integriert sind: der Drucksensor, die Datenschnittstelle, der Datenspeicher, die elektronische Auswerteinheit. Hierdurch wird es ermöglicht, die Bauteilvielfalt einer Serie von Feuerlöschanlagenventilen zu reduzieren, ohne die Funktionsvielfalt kompromittieren zu müssen. Es können ein universeller Gehäusekörper, der für alle gebotenen Funktionalitäten entsprechende Ausnehmungen aufweist, und verschiedentlich konfektionierte Gehäusedeckel hergestellt werden. Durch Zuweisung des jeweiligen Gehäusedeckels mit seinen dort integrierten Funktionalitäten zu dem universellen Gehäusekörper werden dann die jeweils unterschiedlichen Funktionen des Feuerlöschanlagenventils zusammengestellt. Durch dieses erfindungsgemäße Baukastensystem wird es ferner auch ermöglicht, nachträglich bei bestehenden Feuerlöschanlagen durch Tausch des Gehäusedeckels zusätzliche Funktionen hinzuzufügen, oder in der Praxis nicht benötigte Funktionen abzurüsten. All dies gelingt, ohne an der bestehenden Feuerlöschanlage Armaturen zu entfernen oder nachträglich installieren zu müssen, was jeweils mit hohem Aufwand und möglichen Undichtigkeiten einherginge. Der Gehäusedeckel, beispielsweise in der Ausführungsform als Handlochdeckel, weist vorzugsweise bekannte und bewährte Dichtungsmechanismen auf, die einen zuverlässigen Einsatz erlauben.

In einer bevorzugten Ausführungsform ist die Anzeigeeinheit in dem Gehäusedeckel des Feuerlöschanlagenventils integriert. Alternativ ist die Anzeigeeinheit vorzugsweise mittels eines Schwenkmechanismus an dem Feuerlöschanlagenventil angebracht, beispielsweise am Gehäuse, insbesondere am Gehäusedeckel. Alternativ ist die Anzeigeeinheit an einem Druckschalter extern zum Gehäuse des Ventils angeordnet.

In einer weiteren bevorzugten Ausführungsform ist die Anzeigeeinheit reversibel lösbar mit dem Alarmventil verbunden, beispielsweise mittels Integration in den Gehäusedeckel, und weist eine signalleitende Verbindung zu der elektronischen Auswerteinheit auf, die bei Montage der Anzeigeeinheit an das Alarmventil automatisch hergestellt wird, und bei Trennen der Anzeigeeinheit von dem Alarmventil automatisch getrennt wird. Vorzugsweise sind am Alarmventil Kontakte angeordnet, die in dem montiertem Zustand leitend mit korrespondierend angeordneten Kontakten an der Anzeigeeinheit verbunden sind, und die von den korrespondierend angeordneten Kontakten an der Anzeigeeinheit getrennt werden, sobald die Anzeigeeinheit von dem Alarmventil entfernt wird.

In einer weiteren bevorzugten Ausführungsform ist die Anzeigeeinheit und/oder Auswerteinheit in der Alarmventilstation räumlich integriert, also dem Feuerlöschanlagenventil räumlich unmittelbar zugeordnet. Kennzeichnend ist dabei, dass einer Anzeigeeinheit und/oder Auswerteinheit einer einzelnen Feuerlöschanlagenventilstation zugeordnet ist, vorzugsweise durch Anordnung des Gehäuses der Anzeigeeinheit und/oder Auswerteinheit am Feuerlöschanlagenventil oder dessen eintritts- oder austrittsseitiger Löschfluidleitung.

Vorzugsweise ist die Auswerteinheit dazu eingerichtet, ein eine Störung anzeigendes Signal zu erzeugen und in dem Datenspeicher oder an der Datenschnittstelle bereitzustellen, sobald die Anzeigeeinheit von der Auswerteinheit getrennt ist.

In einer weiteren bevorzugten Ausführungsform weist die Anzeigeeinheit eine dedizierte Datenschnittstelle zur wenigstens eingehenden, vorzugsweise bidirektionalen, Datenkommunikation mit einer externen Datenquelle auf. Die externe Datenquelle ist vorzugsweise eine Brandmelde- oder Löschsteuerzentrale.

In einer weiteren bevorzugten Ausführungsform ist die Auswerteinheit dazu eingerichtet, bestimmte vorbestimmte Zustände des Feuerlöschanlagenventils in Abhängigkeit der Zustandsinformationen des Feuerlöschanlagenventils zu erkennen, und als Reaktion auf die erkannten Zustände die Anzeigeeinheit zur Anzeige einer dem Zustand angemessenen Handlungsempfehlung anzusteuern. Die Handlungsempfehlung ist beispielsweise die Anzeige der Nachricht "zu geringer Druck", und/oder "Druckerzeuger starten", wenn ein zu geringer Druckwert von dem bzw. den Drucksensoren übermittelt wird. Weiter beispielsweise lautet die Handlungsempfehlung "Feuer im Löschbereich X" und/oder "Evakuiere Gebäude Y" bei Erkennen eines Alarmzustands.

Der Gehäusedeckel, insbesondere in der Ausführungsform als Handlochdeckel, ermöglicht bei temporärer Entfernung vorzugsweise den Zugriff auf die Fluideintrittskammer und/oder Fluidaustrittskammer sowie besonders bevorzugt auf den Schließkörper. Bei Integration des Drucksensors in den Gehäusedeckel sind vorzugsweise für den Drucksensor, oder bei mehreren Drucksensoren für jeden Drucksensor, entsprechende Fluidleitungskanäle in Form von Ausnehmungen vorgesehen, in die der Drucksensor jeweils hinein verlegt werden kann. Es können beispielsweise Sensoren mit integriertem A/D-Wandler, sowie optional Verstärker, Microcontroller und dergleichen eingesetzt werden, oder Sensoren, die an einen ebenfalls im Gehäusedeckel integrierten A/D-Wandler angeschlossen werden. Einfachere Sensortypen, wie beispielsweise Druckschalter, lassen sich in analoger Weise im Gehäusedeckel unterbringen. Dasselbe gilt auch für die übrigen vorgenannten Integrationselemente.

Das Feuerlöschanlagenventil ist vorzugsweise ein Nassalarmventil, oder ein Trockenalarmventil, oder ein Sprühwasserventil. Dies umfasst auch "Sonderbauformen" dieser Alarmventiltypen bzw. Kombinationen davon, wie sie als vorgesteuerte Trockenanlagen bekannt sind. Das jeweils dergestalt ausgebildete Ventil weist die weiteren fachüblichen technischen Mittel auf, auf die zugunsten einer prägnanten Darstellung hier verzichtet wird. Im Betrieb unterscheiden sich die vorgenannten Ventiltypen in erster Linie in der Art, wie sich die Druckniveaus in den unterschiedlichen Ventilkammern ändern. Im Betrieb eines Nassalarmventils beispielsweise steht in der mit Löschfluid gefüllten Fluidaustrittskammer bei geschlossenen Sprinklerdüsen ein bestimmter Fluiddruck p2 an, während in der Fluideintrittskammer ein Druck p1 herrscht. Die Drücke p1 und p2 können annähernd gleich oder gleich sein und vorzugsweise im Bereich von 1 bis 25 bar liegen. Der Druck in der Fluidaustrittskammer (p2) fällt, sobald die Sprinklerdüsen öffnen. Mit zeitlicher Verzögerung öffnet, sobald ein bestimmtes Druckgefälle zwischen p2 und dem Druck p1 in der Fluideintrittskammer erreicht oder überschritten wird, der Schließkörper des Ventils, wodurch sich auch der Druck p1 in der Fluideintrittskammer ändert. Der zuvor statische Druck sinkt zunächst unmittelbar nach Öffnen des Ventils, und es stellt sich allmählich ein neuer Druck p3, definiert als Fließdruck, ein. Falls das Ventil einen Alarmkanal aufweist, in dem in Sperrstellung des Schließkörpers Umgebungsdruck herrscht, wird in diesem Alarmkanal mit Öffnen des Ventils in die Freigabestellung ein Druckanstieg zu verzeichnen sein.

Bei Trockenalarmventilen ist die Fluidaustrittskammer (stromabwärts des Schließkörpers) mit einem unter Überdruck stehenden Gas gefüllt, vorzugsweise bei p2 von 0,8 bis 4 bar. Die Fluideintrittskammer ist vorzugsweise wassergefüllt mit p1 in einem Bereich von 1 bis ca. 25 bar, Druckangaben jeweils relativ zum Umgebungsdruck. Falls das Ventil einen Alarmkanal aufweist, in dem in Sperrstellung des Schließkörpers Umgebungsdruck herrscht, wird in diesem Alarmkanal mit Öffnen des Ventils in die Freigabestellung ein Druckanstieg zu verzeichnen sein

Vorzugsweise weist das Feuerlöschanlagenventil bis zu drei in das Ventil integrierte Drucksensoren auf, die jeweils den Druck in der Fluideintrittskammer, der Fluidaustrittskammer und/oder dem Alarmkanal überwachen.

Naßalarmventile sind beispielsweise in EN 12259-2 beschrieben, Trockenalarmventile in EN12259-3 und Sprühwasserventile in prEN 12259-9. Darüber hinaus sind diese Ventiltypen in den Prüf- und Zulassungsspezifikationen privater Institutionen wie VdS Schadenverhütung, Köln, FM Global, West Gloucester oder UL, Northbrook beschrieben.

In einer weiteren bevorzugten Ausführung umfassen der oder die Sensoren einen oder mehrere, vorzugsweise in das Gehäuse integrierte, Drucksensoren.

Die erfindungsgemäße Alarmventilstation wird ferner durch einen oder mehrere Temperatursensoren weitergebildet, welche dazu eingerichtet sind, die Fluidtemperatur innerhalb des Feuerlöschanlagenventils oder einer oder mehrerer der weiteren Komponenten der Alarmventilstation, und/oder die Umgebungstemperatur zu erfassen. Vorzugsweise ist der eine oder sind die mehreren Temperatursensoren signalleitend mit der Anzeigeeinheit zum Ausgeben der erfassten Temperaturdaten verbunden. Die Auswerteinheit und/oder die Anzeigeeinheit weisen vorzugsweise eine Einrichtung zur Zeiterfassung auf. Die eine oder die mehreren Temperatursensoren sind vorzugsweise über die Auswerteinheit signalleitend mit der Anzeigeeinheit und/oder der Auswerteinheit verbunden.

Eine besonders bevorzugte Ausführungsform der erfindungsgemäßen Alarmventilstation weist eine oder mehrere interne Messeinrichtungen zur Erfassung der Wasserhärte und/oder zur Erfassung einer Strömungsgeschwindigkeit auf. Vorzugsweise weist die erfindungsgemäße Alarmventilstation eine oder mehrere interne Messeinrichtungen zur Erfassung des ph-Werts und/oder der Leitfähigkeit des Wassers auf. Vorzugsweise weist die erfindungsgemäße Alarmventilstation eine oder mehrere interne Messeinrichtungen zur Erfassung des Wasserstandes in einem Trockenrohr auf, durch welche feststellbar ist, ob das Trockenrohr entleert werden muss.

Vorzugsweise weist die erfindungsgemäße Alarmventilstation eine oder mehrere interne Messeinrichtungen zur Erfassung einer Öffnung des Gehäusedeckels auf. Somit kann eine Aufzeichnung der durchgeführten Gehäuseöffnungen erfolgen. Die eine oder die mehreren internen Messeinrichtungen sind vorzugsweise signalleitend mit der Anzeigeeinheit zum Ausgeben der erfassten Messdaten verbunden. Die eine oder die mehreren internen Messeinrichtungen sind vorzugsweise über die Auswerteinheit signalleitend mit der Anzeigeeinheit verbunden.

Die Erfindung löst die ihr zugrundeliegende Aufgabe bei einer Feuerlöschanlage der eingangs bezeichneten Art, indem diese eine Alarmventilstation nach einer der vorstehend beschriebenen Ausführungsformen ausgebildet ist. Hinsichtlich der sich hiermit ergebenden Vorteile wird auf die obigen Ausführungen verwiesen.

Die hierin beschriebenen bevorzugten Ausführungsformen bzw. Weiterbildungen der Alarmventilstation sind zugleich auch bevorzugte Ausführungsformen der Feuerlöschanlage. Hierin beschriebene bevorzugte Ausführungsformen bzw. Weiterbildungen der Feuerlöschanlage sind zugleich bevorzugte Ausführungsformen der Alarmventilstation.

Die Erfindung wird im Folgenden unter Bezugnahme auf die beigefügten Figuren anhand bevorzugter Ausführungsbeispiele näher beschrieben. Hierbei zeigen:
- Fig. 1: eine schematische Darstellung eines Ausführungsbeispiels einer erfindungsgemäßen Feuerlöschanlage samt Alarmventilstation,
- Fig. 2 a, b: bieten schematische Ansichten eines Gehäusedeckels für ein Feuerlöschanlagenventil der erfindungsgemäßen Feuerlöschanlage,
- Fig. 3: eine schematische Darstellung eines Ausführungsbeispiels einer erfindungsgemäßen Feuerlöschanlage,
- Fig. 4: eine schematische Darstellung eines weiteren Ausführungsbeispiels einer erfindungsgemäßen Feuerlöschanlage,
- Fig. 5: die Feuerlöschanlage aus Fig. 4 in einer Draufsicht,
- Fig. 6: eine schematische Darstellung eines Feuerlöschanlagenventils der erfindungsgemäßen Feuerlöschanlage, und
- Fig. 7: eine schematische Darstellung eines Drucksensors der erfindungsgemäßen Feuerlöschanlage.

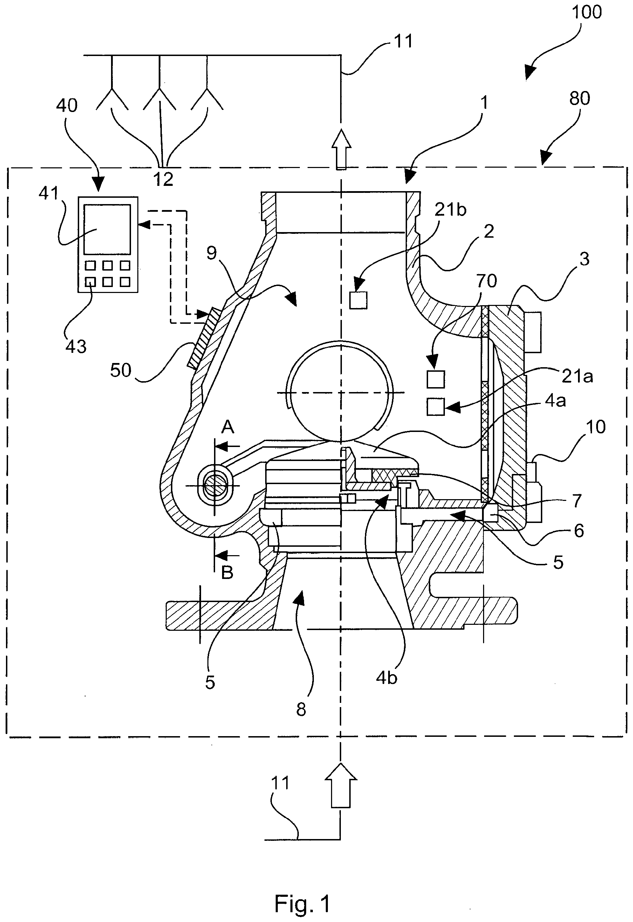

Die Feuerlöschanlage 100 gemäß Fig. 1 ist als Sprinklerlöschanlage ausgebildet und weist ein Feuerlöschanlagenventil 1, mehrere Fluidleitungen 11 und eine Anzeigeeinheit 40 auf. Das Feuerlöschanlagenventil 1 und die Anzeigeeinheit 40 sind Bestandteile einer Alarmventilstation 80.

Das Feuerlöschanlagenventil 1 zum Sperren und Freigeben der Fluidleitungen 11 umfasst ein Gehäuse 2, 3, welches eine Fluideintrittskammer 8, eine Fluidaustrittskammer 9 und einen zwischen einem Sperrzustand und einem Freigabezustand hin und her bewegbaren Schließkörper 4a aufweist. Hin und her umfasst nicht nur eine translatorische, sondern auch rotatorische und andere Bewegungsformen. Die Fluideintrittskammer 8 und die Fluidaustrittskammer 9 sind im Sperrzustand voneinander getrennt und kommunizieren im Freigabezustand fluidleitend miteinander. In das Gehäuse 2 ist der mit dem Ventilsitz 4b in Verbindung stehende Alarmkanal 5 integriert, in welchen wirkend ein Drucksensor 6 angeordnet ist. Der Drucksensor 6 ist in den Gehäusedeckel 3 des Gehäuses 2 integriert. Über eine signalleitende Verbindung ist eine Datenschnittstelle 10 nach außen geführt, und von außen am Gehäusedeckel 3 abgreifbar.

Das Feuerlöschanlagenventil 1 ist in einer Fluidleitung 11 angeordnet, welche dazu eingerichtet ist, Löschfluid den mehreren Sprinklerdüsen 12 zuzuleiten.

Ferner weist die Alarmventilstation 80, vorzugsweise das Feuerlöschanlagenventil 1, eine elektronische Auswerteinheit 50 auf, die zum Empfang von Daten und zur Übermittlung von Zustandsinformationen des Ventils 1 und/oder Handlungsanweisungen signalleitend mit der Anzeigeeinheit 40 verbunden ist.

Der Schließkörper 4a ist in dem dargestellten Ausführungsbeispiel im Sinne einer Nassalarmventilstation ohne eigenen Aktor ausgeführt, kann optional aber einen solchen (nicht dargestellten) Aktor als Steuerantrieb aufweisen. Die elektronische Auswerteinheit 50 ist dann dazu eingerichtet, den Schließkörper 4a mittels des Steuerantriebs wahlweise in die Freigabe- oder in die Sperrstellung zu bringen.

Die Anzeigeeinheit 40 ist dazu eingerichtet, einem Anwender Anzeigen über bestimmte Betriebszustände zur Verfügung zu stellen und/oder ihn anzuleiten. Die Anzeigeeinheit 40 ist dazu eingerichtet, Zahlenwerte und Textzeichen und Grafiken und Bilder wiederzugeben. Die Anzeigeeinheit 40 umfasst einen LCD-Display 41 und ist als portables Mobilfunkgerät ausgebildet. Ferner umfasst die Anzeigeeinheit 40 eine Eingabeeinrichtung 43 zum Eingeben von Steuerbefehlen und Informationen, wobei die Eingabeeinrichtung 43 drucksensitive Eingabeelemente aufweist. Die drucksensitiven Eingabeelemente sind Druckknöpfe.

Das Feuerlöschanlagenventil 1 weist ferner einen Temperatursensor 70 auf, welcher dazu eingerichtet ist, die Fluidtemperatur innerhalb des Feuerlöschanlagenventils 1 zu erfassen. Die Temperatursensoren 70 sind über die Auswerteinheit 50 signalleitend mit der Anzeigeeinheit 40 zum Ausgeben der erfassten Temperaturdaten verbunden.

Zusätzlich weist die Feuerlöschanlage 100 zwei interne Messeinrichtungen 21a,b auf. Die erste interne Messeinrichtung 21a ist zur Erfassung der Wasserhärte und die zweite interne Messeinrichtung 21b ist zur Erfassung einer Strömungsgeschwindigkeit ausgebildet. Die internen Messeinrichtungen 21 sind über die Auswerteinheit 50 signalleitend mit der Anzeigeeinheit 40 zum Ausgeben der erfassten Messdaten als Zustandsinformation verbunden.

Ein Gehäusedeckel 3 ist Bestandteil des Gehäuses 2 und mit diesem fluiddicht verschraubt.

Im Inneren des Gehäuses 2 ist der Schließkörper 4a auf einem Ventilsitz 4b angeordnet, eine Dichtung 7 sorgt für die fluiddichte Abtrennung der Fluideintrittskammer 8 und der Fluidaustrittskammer 9 gegenüber dem Alarmkanal 5.

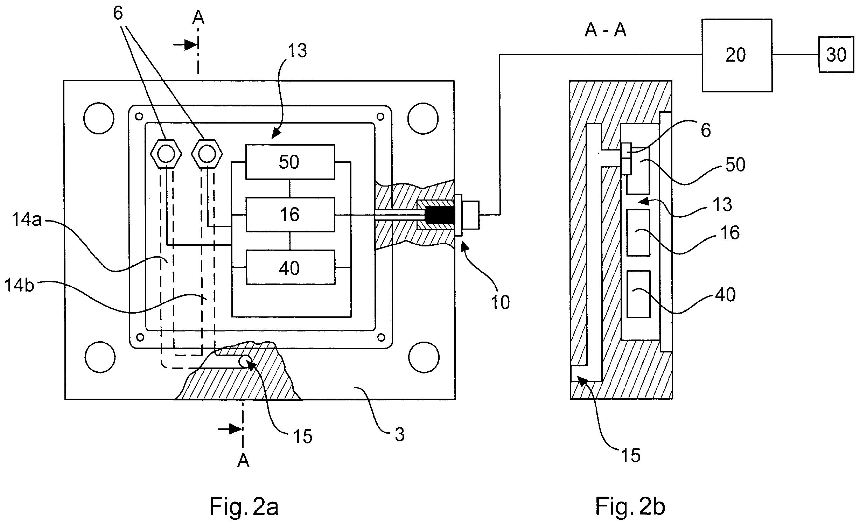

Anders als in Fig. 1 ist in Fig. 2a und Fig. 2b die Anzeigeeinheit 40 und die Auswerteinheit 50 in dem Gehäusedeckel 3 des Gehäuses 2 integriert. Der Gehäusedeckel 3 ist als Handlochdeckel ausgeführt. Im gezeigten Ausführungsbeispiel weist der Gehäusedeckel 3 eine mit einer transparenten Abdeckung versehene Ausnehmung 13 auf, welche in der dem Gehäuse 2 im montierten Zustand des Gehäusedeckels 3 abgewandten Seite ausgenommen ist. In der Ausnehmung 13 sind ein erster und ein zweiter Drucksensor 6 angeordnet, die jeweils über eine Fluidleitung 14 a, b als redundantes System mit einem Fluidport 15 verbunden sind. Der Fluidport 15 ist so positioniert, dass er bei montiertem Gehäusedeckel 3 auf dem Gehäuse 2 fluidleitend mit dem Alarmkanal 5 verbunden ist. Aus Gründen der Übersichtlichkeit ist auf die Darstellung einer Entleerungseinrichtung für das selbsttätige Entleeren des Alarmkanals bei geschlossenem Schließkörper 4a verzichtet worden. Alternativ zu der hier gezeigten Anordnung könnten auch mehrere Drucksensoren mit unterschiedlichen Fluidports verbunden sein, wobei jeder Fluidport mit einer anderen Fluidkammer des Gehäuses fluidleitend in Verbindung gebracht wird, um die unterschiedlich herrschenden Drücke an verschiedenen Stellen des Alarmventils gleichzeitig messen zu können.

Die Drucksensoren 6 sind jeweils signalleitend mit einer Auswerteinheit 50 verbunden. Die Drucksensoren 6 und die Auswerteinheit 50 sind derart miteinander kommunizierend verbunden, dass die Auswerteinheit 50 die von den Drucksensoren 6 ausgegebenen Druckdaten erfassen und verarbeiten kann. Die Auswerteinheit 50 ist mit einem Datenspeicher 16 datenleitend verbunden, und dazu eingerichtet, Datenverarbeitungsergebnisse in dem Datenspeicher 16 zu hinterlegen, und/oder im Datenspeicher hinterlegte Daten, insbesondere Druckdaten von den Drucksensoren 6, einzulesen und zu verarbeiten.

Der Datenspeicher 16 ist optional alternativ oder zusätzlich direkt mit den Drucksensoren 6 datenleitend verbunden, um von diesen erhaltene Druckdaten abzuspeichern.

Die Auswerteinheit 50 ist optional alternativ oder zusätzlich mit einer Anzeigeeinheit 40 datenleitend verbunden und dazu eingerichtet, der Anzeigeeinheit 40 abrufbare Informationen, insbesondere Zustandsinformationen des Feuerlöschanlagenventils 1 zuzuspielen.

Die verschiedenen möglichen Datenverbindungen zwischen den Drucksensoren, der Auswerteinheit 50, dem Datenspeicher 16, und der Anzeigeeinheit 40 sowie der Datenschnittstelle 10 sind in Fig. 2a exemplarisch durch Linien angedeutet.

Der Datenspeicher 16, die Anzeigeeinheit 40, die elektronische Auswerteinheit 50, die Drucksensoren 6 und die Datenschnittstelle 10 sind funktional eigenständige Einheiten, die alternativ zu der exemplarisch gezeigten Ausführungsform auch in separaten Ausnehmungen oder Aufnahmen im Gehäuse 2 oder im Gehäusedeckel 3 integriert sein können. Je nach der vom Kunden gewünschten Funktionsinhalt des Feuerlöschanlagenventils sind in bevorzugten Ausführungsformen nicht sämtliche der abgebildeten Elemente, sondern nur einzelne Elemente oder Unterkombinationen der Elemente in das Gehäuse oder den Gehäusedeckel integriert.

Die Datenschnittstelle 10 ist per Datenfernübertragungsmittel mit einer Datenverarbeitungseinheit 20 verbunden. Die Datenverarbeitungseinheit ist dazu eingerichtet, die von der Datenschnittstelle 10 eingelesenen Informationen zu verarbeiten, und/oder weiterzuleiten, beispielsweise an externe Anzeigemittel 30 und/oder in Form von Alarm- Benachrichtigungen auszugeben, abhängig davon, was für Zustandsinformationen die Datenschnittstelle 10 bereitstellt.

Alternativ zu der hier gezeigten Integration im Gehäusedeckel können eine, mehrere oder sämtliche der in Fig. 2a und Fig. 2b gezeigten integrierten Elemente in einem anderen Bereich des Gehäuses 2 des Feuerlöschanlagenventils 1 integriert sein, oder beispielsweise auch in einem Zwischenflansch, welcher zwischen das Hauptgehäuse 2 und den Gehäusedeckel 3 gesetzt wird. Die grundsätzliche Funktionsweise ist vorzugsweise dieselbe wie beim hier gezeigten Ausführungsbeispiel.

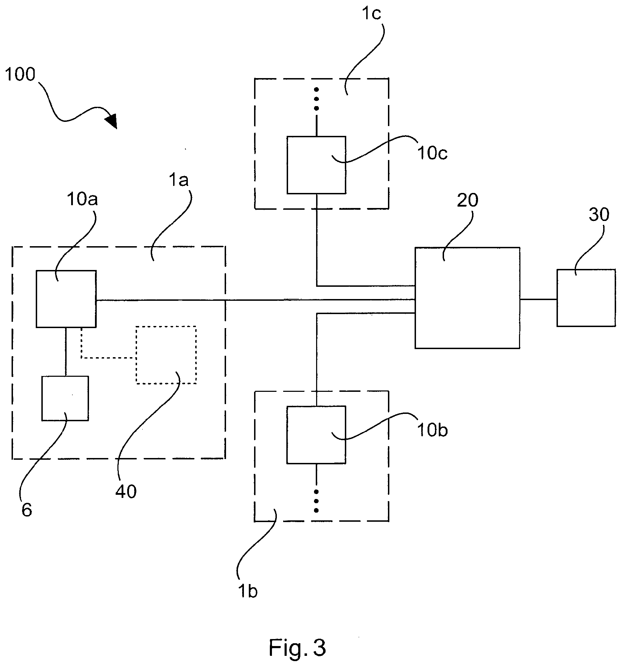

In Fig. 3 ist schematisch eine Feuerlöschanlage 100 dargestellt. Die Feuerlöschanlage 100 überwacht eine Mehrzahl von Feuerlöschanlagenventilen 1 a, b, c, in dem sie datenleitend mit jeweils an den Feuerlöschanlagenventilen 1 a, b, c vorgesehenen Datenschnittstellen 10 a, b, c kommuniziert und von diesen bereitgestellte Zustandsinformationen abruft. Die abgerufenen Zustandsinformationen werden in einer Datenverarbeitungseinheit 20 verarbeitet, und beispielsweise entweder an externe Anzeigemittel 30 weitergegeben, oder zurück zu den Feuerlöschanlagenventilen 1 a, b, c gespielt, und dort auf internen Anzeigeeinheiten 40 wiedergegeben. Optional ist die Datenverarbeitungseinheit 20 dazu eingerichtet, die Ventile 1 a, b, c mittels entsprechender Steuerbefehlen zu steuern, beispielsweise deren Schließkörper zu sperren oder freizugeben.

Das Ventile 1 a, b, c arbeiten im Betrieb dergestalt, dass zumindest einer der Drücke in der Fluideintrittskammer und/oder Fluidaustrittskammer und/oder im Alarmkanal permanent überwacht wird. Von der elektronischen Auswerteinheit 50 oder der Datenverarbeitungseinheit 20 werden die so erhaltenen Druckdaten verarbeitet, insbesondere mit vorgegebenen Grenzwerten abgeglichen. Die Druckdaten und/oder Abweichungen von einem Soll-Druckverlauf oder Überschreitungen beziehungsweise Unterschreitungen der vorgegebenen Grenzwerte werden protokolliert, beispielsweise im Datenspeicher 16 der Feuerlöschanlagenventile oder einem nicht dargestellten Datenspeicher der Datenverarbeitungseinheit 20. Wenn beispielsweise der Druck in der Fluideintrittskammer fällt, obwohl der Schließkörper als in Sperrstellung befindlich gemeldet wird, ist die Datenverarbeitungseinheit oder die Auswerteinheit vorzugweise dazu eingerichtet, ein entsprechendes Fehlersignal auszugeben. Wenn beispielsweise der Druck in dem - im Bereitschaftszustand unter atmosphärischem Druck stehenden - Alarmkanal durch Öffnen des Alarmventils steigt, ist die Datenverarbeitungseinheit oder die Auswerteinheit vorzugweise dazu eingerichtet, ein entsprechendes Alarmsignal auszugeben.

Wenn beispielsweise der Druck in der Fluidaustrittskammer unter einen bestimmten Grenzwert fällt, etwa nach Auslösen der Sprinklerdüsen, unterhalb dessen der Schließkörper öffnen sollte, sich aber trotz der Meldung des Ventils, dass sich der Schließkörper in Freigabestellung befindet, keine Druckänderung im Fluideintrittsbereich und/oder Alarmkanal einstellt, ist die Datenverarbeitungseinheit vorzugsweise dazu eingerichtet, auch hierfür ein entsprechendes Signal für die vermutete Störung auszugeben.

In ähnlicher Weise ist mittels der laufenden Drucküberwachung im Inneren des Feuerlöschanlagenventils das Auftreten von Leckagen oder sonstigen Funktionsstörungen aus der Ferne detektierbar. Manuelle Wartungseinsätze können dann zielgerichtet gestartet werden. Dies gilt umso mehr, wenn in den Zustandsinformationen des Feuerlöschanlagenventils auch dessen Standort und Bauart mit übermittelt werden und wenn eine Klartextanzeige vorhanden ist. Dies vereinfacht die Einweisung des Wartungspersonals.

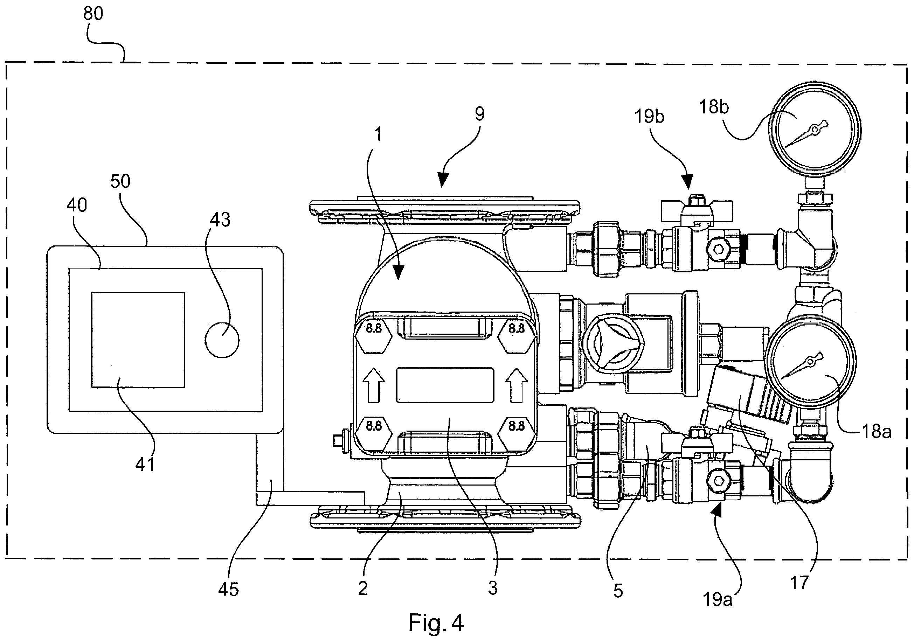

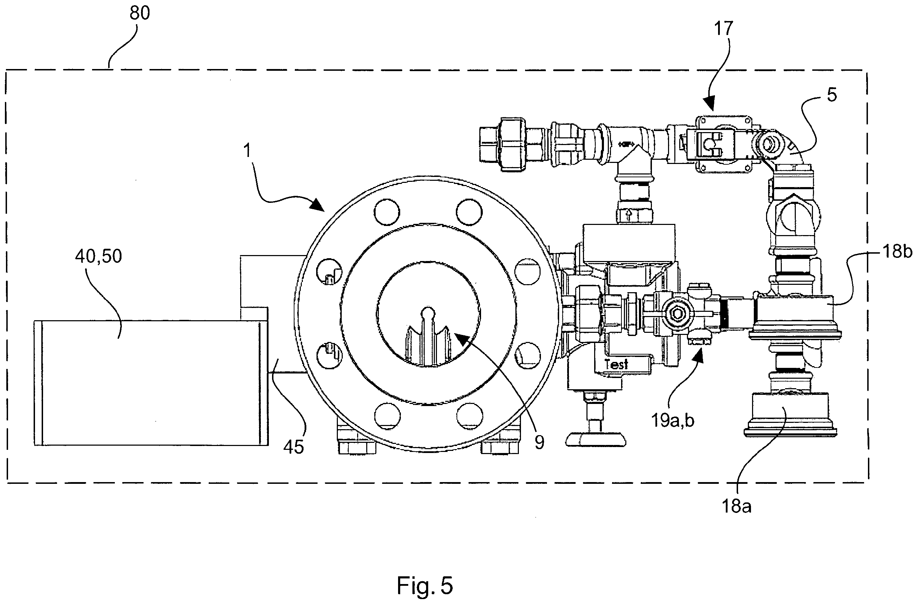

Gemäß Fig. 4 und Fig. 5 ist an dem Gehäuse 2, 3 des als Naßalarmventil ausgebildeten Feuerlöschanlagenventils 1 eine Befestigungseinrichtung 45 zum reversibel lösbaren Befestigen der Anzeigeeinheit 40 angeordnet. Die Anzeigeeinheit 40 umfasst eine Eingabeeinrichtung 43 zum Eingeben von Steuerbefehlen, wobei die Eingabeeinrichtung 43 ein drucksensitives Eingabeelement aufweist, welches als Druckknopf ausgebildet ist. Eine elektronische Auswerteinheit ist in die Anzeigeeinheit 40 integriert. Die Auswerteinheit 50 bildet mit der Anzeigeeinheit 40 eine extern an dem Feuerlöschanlagenventil angeordnete integrale Einheit.

Die Anzeigeeinheit 40 umfasst ein Display 41 und drei LED-Einheiten in unterschiedlicher Farbe. Mittels der drei LED-Einheiten lässt sich ein gestuftes Anzeigenkonzept realisieren. Das Aufleuchten der roten LED-Einheit signalisiert, dass ein Feuer detektiert wurde, das Aufleuchten der gelben LED-Einheit signalisiert, dass eine Störung vorliegt, und das Aufleuchten der grünen LED-Einheit signalisiert, dass weder ein Feuer detektiert wurde noch eine Störung der Feuerlöschanlage vorliegt.

Die Befestigungseinrichtung 45 umfasst Steckmittel zum reversibel lösbaren Anstecken der Anzeigeeinheit 40 an das Gehäuse 2 des Feuerlöschanlagenventils 1. Die Befestigungseinrichtung 45 weist ferner ein Scharnier auf, welches dazu eingerichtet ist, den Anstellwinkel bzw. die Neigung der befestigten Anzeigeeinheit 40 zu verändern.

Zwischen der Fluideintrittskammer und der Fluidaustrittskammer 9 des Feuerlöschanlagenventils 1 erstreckt sich eine Ausgleichsleitung, mittels welcher eine fluidleitende Verbindung zwischen der Fluideintrittskammer und der Fluidaustrittskammer 9 unter Umgehung des Schließkörpers herstellbar ist. Entlang der Ausgleichsleitung sind zwei Ventile mit Abstellhahn 19a, 19b und zwei Manometer 18a, 18b sowie ein nicht beziffertes Rückschlagventil angeordnet.

Der in Figur 4 und 5 als externe Leitung verlängerte Alarmkanal 5 verbindet das Feuerlöschanlagenventil 1 über ein Prüfventil 17 mit einem als Druckschalter ausgebildeten Drucksensor (nicht dargestellt). Im Betrieb steht in der mit Löschfluid gefüllten Fluidaustrittskammer 9 bei geschlossenen Sprinklerdüsen ein bestimmter Fluiddruck p2 an, während in der Fluideintrittskammer ein Druck p1 herrscht. Die Drücke p1 und p2 können annähernd gleich oder gleich sein und vorzugsweise im Bereich von 1 bis 25 bar liegen. Der Druck in der Fluidaustrittskammer 9 p2 fällt, sobald die Sprinklerdüsen öffnen. Mit zeitlicher Verzögerung öffnet, sobald ein bestimmtes Druckgefälle zwischen p2 und dem Druck p1 in der Fluideintrittskammer erreicht oder überschritten wird, der Schließkörper des Ventils 1, wodurch sich auch der Druck p1 in der Fluideintrittskammer ändert. Der zuvor statische Druck sinkt zunächst unmittelbar nach Öffnen des Ventils, und es stellt sich allmählich ein neuer Druck p3, definiert als Fließdruck, ein. In dem Alarmkanal kommt es beim Öffnen des Ventils 1 ebenfalls zu einer Druckänderung, welche von dem Drucksensor detektiert wird. Infolge des Signals des Drucksensors wird bei Detektion einer Druckänderung ein entsprechendes Alarmsignal, beispielsweise an eine Brandmelder- und/oder Löschsteuerzentrale, ausgelöst.

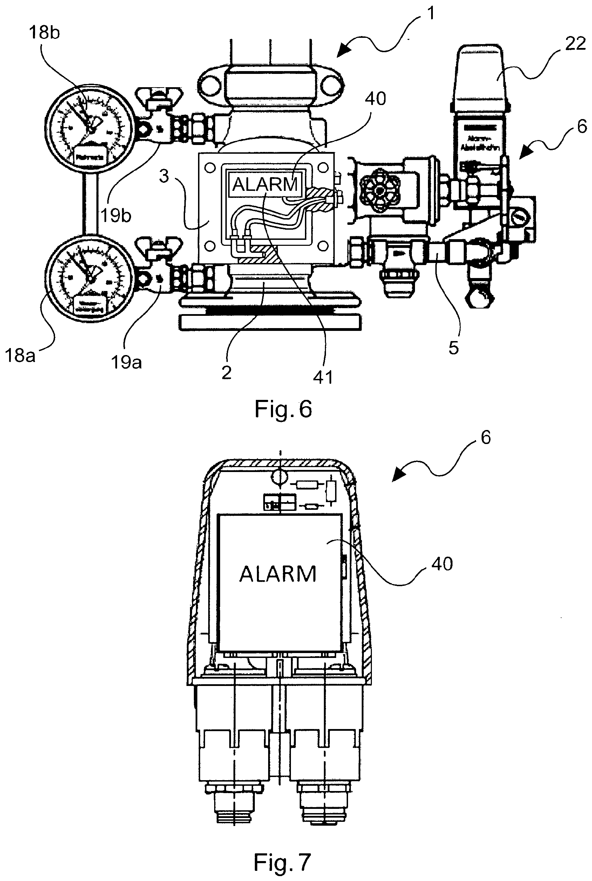

Gemäß Fig. 6 ist die Anzeigeeinheit 40 samt Display 41 in dem Gehäusedeckel 3 des Feuerlöschanlagenventils 1 integriert. Die Fluideintrittskammer des Feuerlöschanlagenventils 1 ist fluidleitend mit einem als externe Leitung verlängerten Alarmkanal 5 verbunden. Der Alarmkanal 5 ist wiederum mit einem als Druckschalter ausgebildeten Drucksensor 6 verbunden, welcher eine Druckänderung in dem Alarmkanal 5 detektiert und dessen Druckänderung ein Alarmsignal initiiert, was wiederum die Aktivierung des das Alarmmittel 22 bewirkt. Das Alarmmittel 22 kann ein optischer Melder, beispielsweise eine Blitzleuchte, oder ein akustischer Melder, beispielsweise eine Hupe, sein.

Alternativ oder zusätzlich können weitere Komponenten der erfindungsgemäßen Alarmventilstation eine Anzeigeeinheit 40 aufweisen. Wie in Fig. 7 dargestellt, kann beispielsweise auch der als separates Bauteil ausgeführte Drucksensor 6, welcher vorzugsweise als Druckschalter ausgebildet ist, eine Anzeigeeinheit 40 aufweisen. Die Anzeigeeinheit 40 ist an dem Drucksensor 6 befestigt. In der dargestellten Ausführungsform ist die Anzeigeeinheit 40 mittels einer Befestigungseinrichtung reversibel lösbar an dem Drucksensor 6 befestigt.

### Bezugszeichen

- 1, 1a, b, c: Feuerlöschanlagenventil
- 2: Gehäuse
- 3: Gehäusedeckel
- 4a: Schließkörper
- 4b: Ventilsitz
- 5: Alarmkanal
- 6: Drucksensor
- 7: Dichtung
- 8: Fluideintrittskammer
- 9: Fluidaustrittskammer
- 10, 10a,b, c: Datenschnittstelle
- 11: Fluidleitung
- 12: Sprinklerdüse
- 13: Ausnehmung
- 14a, b: Fluidleitung
- 15: Fluidport
- 16: Datenspeicher
- 17: Prüfventil
- 18a, 18b: Manometer
- 19a, 19b: Ventile mit Abstellhahn
- 20: Datenverarbeitungseinheit
- 21: interne Messeinrichtungen
- 22: Alarmmittel
- 30: Anzeigemittel
- 40: Anzeigeeinheit
- 41: Display
- 43: Eingabeeinrichtung
- 44: LED-Einheiten
- 45: Befestigungseinrichtung
- 50: Auswerteinheit
- 70: Temperatursensoren
- 80: Alarmventilstation
- 100: Feuerlöschanlage

## Patentansprüche

1. Feuerlöschanlage (100), insbesondere Sprinkler- oder Sprühwasseranlage, mit mindestens einer Fluidleitung (11),
einer Alarmventilstation (80), an die eine oder mehreren Fluidleitungen angeschlossen sind,
wobei die Alarmventilstation (80)
ein Feuerlöschanlagenventil (1), mit einem Gehäuse (2, 3), welches eine Fluideintrittskammer (8), eine Fluidaustrittskammer (9) und einen zwischen einem Sperrzustand und einem Freigabezustand hin und her bewegbaren Schließkörper (4a) aufweist, wobei die Fluideintrittskammer (8) und die Fluidaustrittskammer (9) im Sperrzustand voneinander getrennt sind und im Freigabezustand fluidleitend miteinander kommunizieren,
einen oder mehrere Sensoren, und
eine elektronischen Auswerteinheit (50) aufweist,,
wobei die Alarmventilstation (80) signalleitend mit dem oder den Sensoren verbunden ist, **dadurch gekennzeichnet, dass** die Auswerteinheit
- in das Gehäuse (2, 3) integriert, extern am Gehäuse angeordnet oder im Bereich von 5m oder weniger des Feuerlöschanlagenventils (1) angeordnet ist,
- signalleitend mit einem oder mehreren Aktoren verbunden ist, und
- dazu eingerichtet ist, in Abhängigkeit der ihr vorliegenden Sensordaten den oder die Aktoren mittels der Steuerbefehle zu steuern,
wobei der Schließkörper (4a) einen Aktor als Steuerantrieb aufweist, und die elektronische Auswerteinheit (50) dazu eingerichtet ist, den Schließkörper (4a) mittels des Steuerantriebs wahlweise in die Freigabe- oder in die Sperrstellung zu bringen; und/oder
wobei der Schließkörper (4a) einen Aktor als Vorsteuerantrieb aufweist, und die elektronische Auswerteinheit (50) dazu eingerichtet ist, den Schließkörper (4a) mittels des Vorsteuerantriebs entweder zu verriegeln, oder zu entriegeln; und/oder
wobei die Alarmventilstation (80) einen Alarmkanal (5) und ein Prüfventil (17) zum Fluten des Alarmkanals (5) aufweist, wobei das Prüfventil einen Aktor als Steuerantrieb aufweist, und die elektronische Auswerteinheit (50) dazu eingerichtet ist, das Prüfventil (17) mittels des Steuerantriebs wahlweise in die Freigabe- oder in die Sperrstellung zu bringen.

2. Feuerlöschanlage (100) nach Anspruch 1,
wobei die Auswerteinheit eine Datenschnittstelle (10) aufweist, zum Empfang von Steuerbefehlen mittels der Datenschnittstelle eingerichtet und dazu eingerichtet ist, den oder die Aktoren mittels der empfangenen, und vorzugsweise weiterverarbeiteten, Steuerbefehle zu steuern.

3. Feuerlöschanlage (100) nach einem der vorstehenden Ansprüche,
wobei die Auswerteinheit (50) signalleitend mit dem bzw. den Sensoren zum Empfang von Daten verbunden ist, zur Datenverarbeitung in zumindest eines von:
- Zustandsinformationen, oder
- Handlungsanweisungen
eingerichtet ist, und zur Übermittlung der Zustandsinformationen und/oder Handlungsanweisungen an eine Anzeigeeinheit (40) eingerichtet ist.

4. Feuerlöschanlage (100) nach einem der vorstehenden Ansprüche,
mit einer Anzeigeeinheit (40), die dazu eingerichtet ist, die Zustandsinformationen und/oder Handlungsanweisungen von der Auswerteinheit zu empfangen und anzuzeigen, wobei vorzugsweise
die Anzeigeeinheit in das Gehäuse (2, 3) integriert ist, oder extern an dem Gehäuse oder im Nahbereich der Alarmventilstation angeordnet ist.

5. Feuerlöschanlage (100) nach einem der vorstehenden Ansprüche,
**dadurch gekennzeichnet, dass** die Anzeigeeinheit (40) dazu eingerichtet ist, Zahlenwerte und/oder Textzeichen wiederzugeben, wobei die Anzeigeeinheit (40) vorzugsweise einen Display, insbesondere einen LCD- oder LED-Display (41) umfasst.

6. Feuerlöschanlage (100) nach einem der vorstehenden Ansprüche,
**dadurch gekennzeichnet, dass** die Anzeigeeinheit (40) als portables Kommunikationsgerät, vorzugsweise als Mobilfunkgerät ausgebildet ist.

7. Feuerlöschanlage (100) nach einem der vorstehenden Ansprüche,
**dadurch gekennzeichnet, dass** die Auswerteinheit (50) und/oder Anzeigeeinheit (40) eine Eingabeeinrichtung (43) zum Eingeben von Steuerbefehlen umfasst, wobei vorzugsweise die Eingabeeinrichtung drucksensitive Eingabeelemente aufweist.

8. Feuerlöschanlage (100) nach einem der vorstehenden Ansprüche,
wobei die Datenschnittstelle (10) zum unidirektionalen oder bidirektionalen, vorzugsweise kabellosen Datenaustausch mit einer fern beabstandeten Datenverarbeitungseinheit eingerichtet ist.

9. Feuerlöschanlage (100) nach einem der Ansprüche 5 bis 8,
wobei vorzugsweise die Anzeigeeinheit und die Auswerteinheit mittels der Datenschnittstelle (10) signalleitend verbunden sind.

10. Feuerlöschanlage (100) nach einem der Ansprüche 5 bis 9,
wobei die Anzeigeeinheit und die Auswerteinheit mittels einer zweiten, dedizierten Datenschnittstelle signalleitend verbunden sind, welche ausgebildet ist als:
USB-Schnittstelle, PCI-Schnittstelle, PCI-Express-Schnittstelle, Thunderbolt-Schnitstelle, WPAN-Schnittstelle, insbesondere VFIR-IrDA, IFIR-IrDA, Bluetooth, oder NFC.

11. Feuerlöschanlage (100) nach Anspruch 10,
wobei die Anzeigeeinheit und die Auswerteinheit dazu eingerichtet sind, sich gegenseitig mittels der dedizierten Schnittstelle zu identifizieren und vorzugsweise selbsttätig die signalleitende Verbindung aufzubauen.

12. Feuerlöschanlage (100) nach einem der vorstehenden Ansprüche,
dadurch genkennzeichnet, dass der oder die Sensoren einen oder mehrere, vorzugsweise in das Gehäuse (2, 3) integrierte, Drucksensoren (6) umfassen.

13. Feuerlöschanlage (100) nach einem der vorstehenden Ansprüche,
**gekennzeichnet durch** einen oder mehrere Temperatursensoren (70), welche dazu eingerichtet sind, die Fluidtemperatur innerhalb des Feuerlöschanlagenventils, und/oder die Temperatur in einer oder mehreren weiteren Komponenten der Alarmventilstation, und/oder die Umgebungstemperatur der Alarmventilstation zu erfassen.

14. Feuerlöschanlage (100) nach einem der vorstehenden Ansprüche,
gen**kennzeichnet durch** eine oder mehrere interne Messeinrichtungen (21) zur Erfassung der Wasserhärte und/oder zur Erfassung einer Strömungsgeschwindigkeit.

## Claims

1. A fire extinguishing system (100), in particular a sprinkler or spray water system comprising
at least one fluid line (11),
an alarm valve station (80) to which one or more fluid lines are connected,
wherein the alarm valve station (80), comprising
a fire extinguishing system valve (1) comprising a housing (2, 3) which has a fluid inlet chamber (8), a fluid outlet chamber (9) and a closing body (4a) reciprocable between a blocking state and a release state, wherein the fluid inlet chamber (8) and the fluid outlet chamber (9) are separated from each other in the blocking state and communicate with each other in fluid-conducting relationship in the release state,
one of more sensors, and
an electronic evaluation unit (50),
wherein the alarm valve station (80) is connected in signal-conducting relationship to one or more sensors
**characterised in that** the evaluation unit
- is integrated in the housing (2, 3), is arranged externally on the housing or in the region of 5 m or less of the fire extinguishing system valve (1)
- is connected in signal-conducting relationship to one or more actuators, and
- is adapted to control the actuator or actuators by means of the control commands,
wherein the closing body (4a) has an actuator as a control drive and the electronic evaluation unit (50) is adapted to move the closing body (4a) selectively into the release or into the blocking position by means of the control drive; and/or
wherein the closing body (4a) has an actuator in the form of a pilot control drive and the electronic evaluation unit (50) is adapted to either lock or unlock the closing body (4a) by means of the pilot control drive; and/or
wherein the alarm valve station (80) has an alarm passage (5) and a testing valve (17) for flooding the alarm passage (5), wherein the testing valve has an actuator as a control drive and the electronic evaluation unit (50) is adapted to move the testing valve (17) selectively into the release or into the blocking position by means of the control drive.

2. A fire extinguishing system (100) according to claim 1 wherein the evaluation unit has a data interface (10) for receiving control commands by means of the data interface and is adapted to control the actuator or actuators by means of the control commands which are received and preferably subjected to further processing.

3. A fire extinguishing system (100) according to one of the preceding claims comprising
wherein the evaluation unit (50) is connected in signal-conducting relationship to the sensor or sensors for receiving data for data processing into at least one of:
- state information, or
- operating instructions
and is adapted to transmit the state information and/or operating instructions to a display unit (40).

4. A fire extinguishing system (100) according to one of the preceding claims comprising a display unit (40) preferably adapted to receive the state information and/or operating instructions from the evaluation unit and to display same, wherein preferably the display unit is integrated in the housing (2, 3), or is arranged externally on the housing or in the proximity of the alarm valve station.

5. A fire extinguishing system (100) according to one of the preceding claims **characterised in that** the display unit (40) is adapted to reproduce numerical values and/or text characters, wherein the display unit (40) preferably includes a display, in particular an LCD or LED display (41).

6. A fire extinguishing system (100) according to one of the preceding claims **characterised in that** the display unit (40) is in the form of a portable communication device, preferably a mobile radio device.

7. A fire extinguishing system (100) according to one of the preceding claims **characterised in that** the evaluation unit (50) and/or display unit (40) includes an input device (43) for the input of control commands,
wherein preferably the input device has pressure-sensitive input elements.

8. A fire extinguishing system (100) according one of the preceding claims wherein the data interface (10) is adapted for unidirectional or bidirectional, preferably wireless data exchange with a remotely spaced data processing unit.

9. A fire extinguishing system (100) according to one of claims 5 to 8 wherein the display unit and the evaluation unit are connected in signal-conducting relationship by means of the data interface (10).

10. A fire extinguishing system (100) according to one of claims 5 to 9 wherein the display unit and the evaluation unit are connected in signal-conducting relationship by means of a second dedicated data interface which is in the form of: USB interface, PCI interface, PCI express interface, Thunderbolt interface, WPAN interface, in particular VFIR-IrDA, IFIR-IrDA, Bluetooth or NFC.

11. A fire extinguishing system (100) according to claim 10 wherein the display unit and the evaluation unit are adapted to mutually identify each other by means of the dedicated interface and to preferably automatically form the signal-conducting connection.

12. A fire extinguishing system (100) according to one of the preceding claims **characterised in that** the sensor or sensors include one or more pressure sensors (6) preferably integrated in the housing (2, 3).

13. A fire extinguishing system (100) according to one of the preceding claims **characterised by** one or more temperature sensors (70) adapted to detect the fluid temperature within the fire extinguishing system valve and/or the temperature in one or more further components of the alarm valve station and/or the ambient temperature of the alarm valve station.

14. A fire extinguishing system (100) according to one of the preceding claims **characterised by** one or more internal measuring devices (21) for detecting the water hardness and/or for detecting a flow speed.

## Revendications

1. Installation d'extinction d'incendie (100), en particulier installation de sprinkler ou à eau pulvérisée, avec
au moins un conduit de fluide (11),
un poste de vanne d'alarme (80), auquel un ou plusieurs conduits de fluide sont raccordés,
dans laquelle le poste de vanne d'alarme (80)
présente une vanne d'installation d'extinction d'incendie (1) avec un boîtier (2, 3), lequel présente une chambre d'entrée de fluide (8), une chambre de sortie de fluide (9) et un corps de fermeture (4a) pouvant être déplacé en va-et-vient entre un état de fermeture et un état de déblocage, dans laquelle la chambre d'entrée de fluide (8) et la chambre de sortie de fluide (9) sont séparées l'une de l'autre dans l'état de fermeture et communiquent entre elles avec acheminement de fluide dans l'état de déblocage,
un ou plusieurs capteurs, et
une unité d'évaluation (50) électronique,
dans laquelle le poste de vanne d'alarme (80) est relié par signalisation au ou aux capteurs,
**caractérisée en ce que** l'unité d'évaluation
- est intégrée dans le boîtier (2, 3), est disposée de manière externe au niveau du boîtier ou est disposée dans la zone de 5 m ou moins de la vanne d'installation d'extinction d'incendie (1),
- est reliée par signalisation à un ou plusieurs actionneurs, et
- est mise au point pour commander en fonction des données de capteur qui lui sont fournies le ou les actionneurs au moyen des instructions de commande,
dans laquelle le corps de fermeture (4a) présente un actionneur en tant qu'entraînement de commande, et l'unité d'évaluation (50) électronique est mise au point pour amener au choix dans la position de déblocage ou de fermeture le corps de fermeture (4a) au moyen de l'entraînement de commande ; et/ou
dans laquelle le corps de fermeture (4a) présente un actionneur en tant qu'entraînement pilote et l'unité d'évaluation (50) électronique est mise au point pour soit verrouiller soit déverrouiller le corps de fermeture (4a) au moyen de l'entraînement pilote ; et/ou
dans laquelle le poste de vanne d'alarme (80) présente un canal d'alarme (5) et une vanne de vérification (17) servant à immerger le canal d'alarme (5), dans laquelle la vanne de vérification présente un actionneur en tant qu'entraînement de commande, et l'unité d'évaluation (50) électronique est mise au point pour amener la vanne de vérification (17) au moyen de l'entraînement de commande au choix dans la position de déblocage ou de fermeture.

2. Installation d'extinction d'incendie (100) selon la revendication 1,
dans laquelle l'unité d'évaluation présente une interface de données (10), est mise au point pour recevoir des instructions de commande au moyen de l'interface de données et est mise au point pour commander le ou les actionneurs au moyen des instructions de commande reçues, et de préférence traitées ultérieurement.

3. Installation d'extinction d'incendie (100) selon l'une quelconque des revendications précédentes,
dans laquelle l'unité d'évaluation (50) est reliée par signalisation au ou aux capteurs pour recevoir des données, est mise au point pour le traitement de données d'au moins une parmi :
- des informations d'état, ou
- des instructions d'opération
et est mise au point pour transmettre les infirmations d'état et/ou instructions d'opération à une unité d'affichage (40).

4. Installation d'extinction d'incendie (100) selon l'une quelconque des revendications précédentes,
avec une unité d'affichage (40), qui est mise au point pour recevoir de l'unité d'évaluation et afficher les informations d'état et/ou instructions d'upération, dans laquelle de préférence
l'unité d'affichage est intégrée dans le boîtier (2, 3) ou est disposée de manière externe au niveau du boîtier ou dans la zone à proximité du poste de vanne d'alarme.

5. Installation d'extinction d'incendie (100) selon l'une quelconque des revendications précédentes,
**caractérisée en ce que** l'unité d'affichage (40) est mise au point pour reproduire des valeurs numériques et/ou des caractères de texte, dans laquelle l'unité d'affichage (40) comprend de préférence un écran, en particulier un écran LCD ou LED (41).

6. Installation d'extinction d'incendie (100) selon l'une quelconque des revendications précédentes,
**caractérisée en ce que** l'unité d'affichage (40) est réalisée sous la forme d'un appareil de communication portable, de préférence sous la forme d'un appareil radio mobile.

7. Installation d'extinction d'incendie (100) selon l'une quelconque des revendications précédentes,
**caractérisée en ce que** l'unité d'évaluation (50) et/ou l'unité d'affichage (40) comprennent un dispositif de saisie (43) servant à saisir des instructions de commande, dans laquelle de préférence le dispositif de saisie présente des éléments de saisie sensibles à la pression.

8. Installation d'extinction d'incendie (100) selon l'une quelconque des revendications précédentes,
dans laquelle l'interface de données (10) est mise au point pour l'échange de données unidirectionnel ou bidirectionnel, de préférence sans câble, avec une unité de traitement de données tenue à distance.

9. Installation d'extinction d'incendie (100) selon l'une quelconque des revendications 5 à 8,
dans laquelle de préférence l'unité d'affichage et l'unité d'évaluation sont reliées par signalisation au moyen de l'interface de données (10).

10. Installation d'extinction d'incendie (100) selon l'une quelconque des revendications 5 à 9,
dans laquelle l'unité d'affichage et l'unité d'évaluation sont reliées par signalisation au moyen d'une seconde interface de données dédiée, laquelle est réalisée sous la forme :
d'une interface USB, interface PCI, interface PCI express, interface de Thunderbolt, une interface WPAN, en particulier de VFIR-IrDA, IFIR-IrDA, Bluetooth ou NFC.

11. Installation d'extinction d'incendie (100) selon la revendication 10,
dans laquelle l'unité d'affichage et l'unité d'évaluation sont mises au point pour s'identifier mutuellement au moyen de l'interface dédiée et établir de préférence de manière autonome la liaison de signalisation.

12. Installation d'extinction d'incendie (100) selon l'une quelconque des revendications précédentes,
**caractérisée en ce que** le ou les capteurs comprennent un ou plusieurs capteurs de pression (6) de préférence intégrés dans le boîtier (2, 3).

13. Installation d'extinction d'incendie (100) selon l'une quelconque des revendications précédentes,
**caractérisée par** un ou plusieurs capteurs de température (70), lesquels sont mis au point pour détecter la température de fluide à l'intérieur de la vanne d'installation d'extinction d'incendie et/ou la température dans un ou plusieurs autres composants du poste de vanne d'alarme et/ou la température d'environnement du poste de vanne d'alarme.

14. Installation d'extinction d'incendie (100) selon l'une quelconque des revendications précédentes,
**caractérisée par** un ou plusieurs dispositifs de mesure (21) internes, servant à détecter la dureté de l'eau et/ou servant à détecter une vitesse d'écoulement.
